# EUROPEAN PATENT APPLICATION

(11) **EP 4 668 806 A1**
(43) Date of publication of application: **24.12.2025**
(21) Application number: 23921686.4
(22) Date of filing: 14.02.2023
(51) Int. Cl.: H04W 8/24

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); SHI, Zhihua, Dongguan, Guangdong 523860 (CN)
(74) Representative: Taor, Simon Edward William
(86) International application number: PCT/CN2023/075908
(87) International publication number: WO 2024/168516

(57) **Abstract**

A wireless communication method, a terminal device, and a network device are provided. The terminal device can support uplink spatial filter prediction based on transmitting and receiving sides deployed network models, and/or the terminal device can support downlink spatial filter prediction based on the transmitting and receiving sides deployed network models, thereby reducing overhead and latency for uplink spatial filter management and/or downlink spatial filter management. The wireless communication method includes the following. A terminal device transmits first capability information. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

## Description

### TECHNICAL FIELD

This application relates to the field of communication, and more specifically to a wireless communication method, a terminal device, and a network device.

### BACKGROUND

In a new radio (NR) system, communication in a millimeter-wave frequency band is introduced, and a corresponding beam management mechanism is also introduced, including uplink beam management and downlink beam management. The downlink beam management includes downlink beam sweeping, optimal beam reporting at a terminal side, downlink beam indication at a network side, and other processes. The uplink beam management includes uplink beam sweeping, uplink beam indication at the network side, and other processes. Specifically, for the downlink beam management, a network device sweeps all transmit beam directions through downlink reference signals, and a terminal device can use different receive beams for measurement, so that all beam pairs can be traversed. For the uplink beam management, the terminal device sweeps all transmit beam directions through uplink reference signals, and the network device can use different receive beams for measurement, so that all beam pairs can be traversed.

Therefore, in the uplink beam management and the downlink beam management, all combinations of transmit beams and receive beams need to be traversed to select an optimal beam, resulting in a lot of overhead and latency.

### SUMMARY

A wireless communication method, a terminal device, and a network device are provided in embodiments of the disclosure. The terminal device can support uplink spatial filter prediction based on transmitting and receiving sides deployed network models, and/or the terminal device can support downlink spatial filter prediction based on the transmitting and receiving sides deployed network models, thereby reducing overhead and latency for uplink spatial filter management and/or downlink spatial filter management.

In a first aspect, a wireless communication method is provided. The method includes the following. A terminal device transmits first capability information. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

In a second aspect, a wireless communication method is provided. The method includes the following. A network device receives first capability information from a terminal device. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

In a third aspect, a terminal device is provided. The terminal device is configured to perform the method in the first aspect.

Specifically, the terminal device includes functional modules for performing the method in the first aspect.

In a fourth aspect, a network device is provided. The network device is configured to perform the method in the second aspect.

Specifically, the network device includes functional modules for performing the method in the second aspect.

In a fifth aspect, a terminal device is provided. The terminal device includes a processor and a memory. The memory is configured to store a computer program. The processor is configured to invoke and execute the computer program stored in the memory, to cause the terminal device to perform the method in the first aspect.

In a sixth aspect, a network device is provided. The network device includes a processor and a memory. The memory is configured to store a computer program. The processor is configured to invoke and execute the computer program stored in the memory, to cause the network device to perform the method in the second aspect.

In a seventh aspect, an apparatus is provided. The apparatus is configured to implement the method in any one of the first aspect and the second aspect.

Specifically, the apparatus includes a processor. The processor is configured to invoke and execute a computer program stored in a memory, to cause a device equipped with the apparatus to perform the method in any one of the first aspect and the second aspect.

In an eighth aspect, a computer-readable storage medium is provided. The computer-readable storage medium is configured to store a computer program which causes a computer to perform the method in any one of the first aspect and the second aspect.

In a ninth aspect, a computer program product is provided. The computer program product includes computer program instructions which cause a computer to perform the method in any one of the first aspect and the second aspect.

In a tenth aspect, a computer program is provided. The computer program, when executed by a computer, causes the computer to perform the method in any one of the first aspect and the second aspect.

With the above technical solution, the terminal device can support downlink spatial filter prediction based on the transmitting and receiving sides deployed network models, where the terminal device can perform downlink spatial filter prediction based on a first network model, and the network device can perform downlink spatial filter prediction based on a second network model; and/or the terminal device can support uplink spatial filter prediction based on the transmitting and receiving sides deployed network models, where the terminal device can perform uplink spatial filter prediction based on a third network model, and the network device can perform uplink spatial filter prediction based on a fourth network model. As such, overhead and latency for uplink spatial filter management and/or downlink spatial filter management can be reduced.

### BRIEF DESCRIPTION OF THE DRAWINGS

FIG. 1 is a schematic architectural diagram of a communication system where embodiments of the disclosure are applied.
FIG. 2 is a schematic diagram illustrating connection of neurons in a neural network provided in the disclosure.
FIG. 3 is a schematic structural diagram of a neural network provided in the disclosure.
FIG. 4 is a schematic diagram of a convolutional neural network provided in the disclosure.
FIG. 5 is a schematic structural diagram of a long short-term memory (LSTM) unit provided in the disclosure.
FIG. 6 is a schematic diagram illustrating downlink beam sweeping provided in the disclosure.
FIG. 7 is another schematic diagram illustrating downlink beam sweeping provided in the disclosure.
FIG. 8 is yet another schematic diagram illustrating downlink beam sweeping provided in the disclosure.
FIG. 9 is a schematic diagram of a spatial-domain beam prediction model provided in the disclosure.
FIG. 10 is another schematic diagram of a spatial-domain beam prediction model provided in the disclosure.
FIG. 11 is a schematic diagram of a temporal beam prediction model provided in the disclosure.
FIG. 12 is a schematic diagram illustrating downlink beam management provided in the disclosure.
FIG. 13 is a schematic diagram illustrating uplink beam management provided in the disclosure.
FIG. 14 is a schematic flowchart of a wireless communication method provided in embodiments of the disclosure.
FIG. 15 is a schematic diagram illustrating downlink beam (pair) measurement of a user equipment (UE) provided in embodiments of the disclosure.
FIG. 16 is a schematic diagram illustrating downlink beam (pair) prediction provided in embodiments of the disclosure.
FIG. 17 is another schematic diagram illustrating downlink beam (pair) prediction provided in embodiments of the disclosure.
FIG. 18 is a schematic diagram illustrating uplink beam (pair) measurement of a network (NW) provided in embodiments of the disclosure.
FIG. 19 is yet another schematic diagram illustrating downlink beam (pair) prediction provided in embodiments of the disclosure.
FIG. 20 is yet another schematic diagram illustrating downlink beam (pair) prediction provided in embodiments of the disclosure.
FIG. 21 is an overall flowchart illustrating downlink beam (pair) prediction of dual artificial intelligence (AI)/machine learning (ML) models provided in embodiments of the disclosure.
FIG. 22 is another schematic diagram illustrating uplink beam (pair) measurement of an NW provided in embodiments of the disclosure.
FIG. 23 is a schematic diagram illustrating uplink beam (pair) prediction provided in embodiments of the disclosure.
FIG. 24 is another schematic diagram illustrating uplink beam (pair) prediction provided in embodiments of the disclosure.
FIG. 25 is yet another schematic diagram illustrating uplink beam (pair) prediction provided in embodiments of the disclosure.
FIG. 26 is yet another schematic diagram illustrating uplink beam (pair) prediction provided in embodiments of the disclosure.
FIG. 27 is an overall flowchart illustrating uplink beam (pair) prediction of dual AI/ML models provided in embodiments of the disclosure.
FIG. 28 is a schematic block diagram of a terminal device provided in embodiments of the disclosure.
FIG. 29 is a schematic block diagram of a network device provided in embodiments of the disclosure.
FIG. 30 is a schematic block diagram of a communication device provided in embodiments of the disclosure.
FIG. 31 is a schematic block diagram of an apparatus provided in embodiments of the disclosure.
FIG. 32 is a schematic block diagram of a communication system provided in embodiments of the disclosure.

### DETAILED DESCRIPTION

The following will describe technical solutions of embodiments of the disclosure with reference to the accompanying drawings in embodiments of the disclosure. Apparently, embodiments described herein are some embodiments, rather than all embodiments, of the disclosure. Based on the embodiments of the disclosure, all other embodiments obtained by those of ordinary skill in the art without creative effort shall fall within the protection scope of the disclosure.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), an internet of things (IoT), a wireless fidelity (Wi-Fi), a 5^{th} generation (5G) system, a 6^{th} generation (6G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, sidelink (SL) communication, vehicle to everything (V2X) communication, or the like. Embodiments of the disclosure can also be applied to these communication systems.

In some embodiments, a communication system in embodiments of the disclosure may be applied to a carrier aggregation (CA) scenario, a dual connectivity (DC) scenario, a standalone (SA) network deployment scenario, or a non-standalone (NSA) network deployment scenario.

In some embodiments, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

In some embodiments, the communication system in embodiments of the disclosure may be applied to a frequency range 1 (FR1) frequency band (corresponding to a frequency range of 410 megahertz (MHz) to 7.125 gigahertz (GHz)), or may be applied to an FR2 frequency band (corresponding to a frequency range of 24.25 GHz to 52.6 GHz), or may be applied to a new frequency band, for example, a high frequency band corresponding to a frequency range of 52.6 GHz to 71 GHz or a frequency range of 71 GHz to 114.25 GHz.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/system on chip (SoC), etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a node B (NB) in WCDMA, or may be an evolutional node B (eNB or eNodeB) in LTE, or a relay station or an AP, or an in-vehicle device, a wearable device, a network device or base station (gNB) or a transmission reception point (TRP) in an NR network, a network device in a future evolved PLMN, or a network device in an NTN, etc.

By way of explanation rather than limitation, in embodiments of the disclosure, the network device may be mobile. For example, the network device may be a mobile device. In some embodiments, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

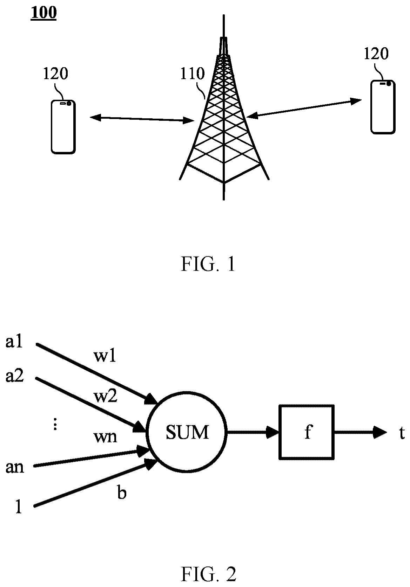

Exemplarily, FIG. 1 illustrates a communication system 100 where embodiments of the disclosure are applied. The communication system 100 may include a network device 110. The network device 110 may be a device for communicating with a terminal device 120 (also referred to as "communication terminal" or "terminal"). The network device 110 can provide a communication coverage for a particular geographical area and communicate with terminal devices in the coverage area.

FIG. 1 exemplarily illustrates one network device and two terminal devices. In some embodiments, the communication system 100 may include multiple network devices, and there can be other quantities of terminal devices in a coverage area of each of the network devices. Embodiments of the disclosure are not limited in this regard.

In some embodiments, the communication system 100 may further include other network entities such as a network controller, a mobility management entity, or the like, and embodiments of the disclosure are not limited in this regard.

It may be understood that in embodiments of the disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be repeated herein. The communication device may further include other devices such as a network controller, a mobility management entity, or other network entities in the communication system 100, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, the disclosure relates to a first communication device and a second communication device. The first communication device may be a terminal device, such as a mobile phone, a machine facility, a customer premise equipment (CPE), an industrial device, or a vehicle. The second communication device may be a peer communication device of the first communication device, such as a network device, a mobile phone, an industrial device, or a vehicle. In embodiments of the disclosure, the first communication device may be a terminal device, and the second communication device may be a network device (i.e., uplink communication or downlink communication). Alternatively, the first communication device may be a first terminal, and the second communication device may be a second terminal (i.e., sidelink communication).

Terms used in implementations of the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

In embodiments of the disclosure, the "pre-defined" or "preconfigured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may be, for example, an evolution of an existing LTE protocol, NR protocol, Wi-Fi protocol, or a protocol related to other communication systems, and the disclosure is not limited in this regard.

For better understanding of embodiments of the disclosure, a neural network and machine learning related to the disclosure will be described.

The neural network (NN) is a computational model consisting of multiple neuron nodes connected to one another. The connection between the nodes represents a weighted value from an input signal to an output signal, which is referred to as a weight. Each node performs weighted summation (SUM) on different input signals and outputs a result through a particular activation function (f). FIG. 2 is a schematic diagram of a neuron structure, where a1, a2, ..., an represent input signals, w1, w2, ..., wn represent weights, f represents an activation function, and t represents an output.

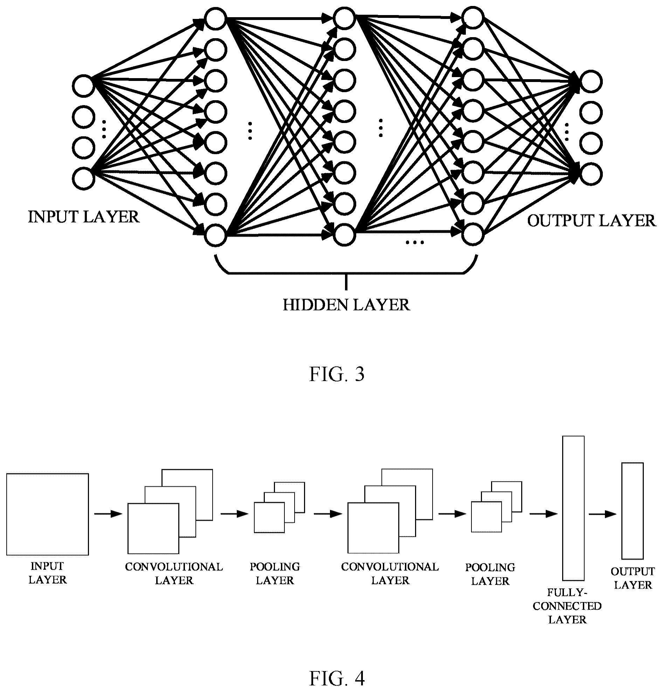

A simple neural network is illustrated in FIG. 3, which includes an input layer, a hidden layer, and an output layer. Different outputs can be obtained with different connection manners of multiple neurons, weights, and activation functions, and then a mapping relationship from an input to an output is fitted. Herein, each upper-level node is connected to all lower-level nodes thereof. This neural network is a fully-connected neural network, which may also be referred to as a deep neural network (DNN).

A basic structure of a convolutional neural network (CNN) includes an input layer, multiple convolutional layers, multiple pooling layers, a fully-connected layer, and an output layer, as illustrated in FIG. 4. Each neuron of a convolutional kernel in the convolutional layer is locally connected to its input, and the pooling layer is introduced to extract a local maximum value or average value feature of a certain layer, which effectively reduces parameters of the network and exploits local features, so that the convolutional neural network can achieve fast convergence and have excellent performance.

Deep learning uses a deep neural network with multiple hidden layers, which greatly improves the network's feature learning capability and can fit a complex non-linear mapping from an input to an output, and thus, it is widely used in speech and image processing fields. In addition to the deep neural network, for different tasks, the deep learning further includes a CNN, a recurrent neural network (RNN), and other common basic structures.

A basic structure of a convolutional neural network includes an input layer, multiple convolutional layers, multiple pooling layers, a fully-connected layer, and an output layer, as illustrated in FIG. 4. Each neuron of a convolutional kernel in the convolutional layer is locally connected to its input, and the pooling layer is introduced to extract a local maximum value or average value feature of a certain layer, which effectively reduces parameters of the network and exploits local features, so that the convolutional neural network can achieve fast convergence and have excellent performance.

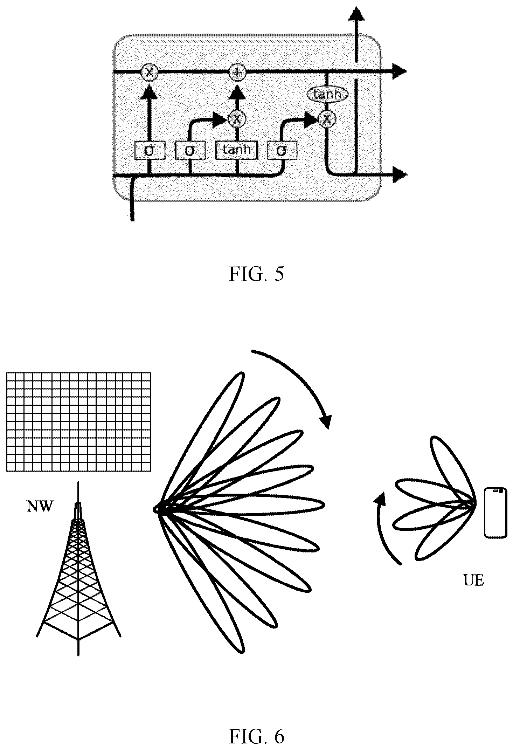

The RNN is a neural network which models sequence data, and has achieved remarkable accomplishments in the natural language processing field, for example, applications of machine translation and speech recognition. Specifically, a network device memorizes information of a past moment and uses the information in calculation of a current output, that is, nodes between hidden layers are no longer unconnected but connected, and an input to a hidden layer includes not only an output of an input layer but also an output of a hidden layer at a previous moment. Common RNN includes structures such as long short-term memory (LSTM) and gated recurrent unit (GRU). FIG. 5 illustrates a basic structure of an LSTM unit, which may include a *tanh* activation function. Different from the RNN which considers only the most recent state, a cell state of the LSTM can determine which states may be retained and which states may be forgotten, thereby solving long-term memory limitations of the traditional RNN.

An NN model can be trained and obtained through the processes of construction, training, verification, and testing of a dataset. Herein, it is assumed that each NN model has been trained offline or online in advance. It may be noted that offline training and online training are not mutually exclusive. First, a network (NW) can obtain a static training result through offline training on a dataset, which may be referred to as offline training. During the use of the NN by the NW or UE, with further measurement and/or reporting by the UE, the NN model can continue to collect more data and perform real-time online training to optimize parameters of the NN model, thereby achieving better inference and prediction results.

For better understanding of embodiments of the disclosure, NR beam management related to the disclosure will be described.

In an NR system, communication in a millimeter-wave frequency band is introduced, and a corresponding beam management mechanism is also introduced, including uplink beam management and downlink beam management. The downlink beam management includes downlink beam sweeping, beam measurement and reporting at a UE, downlink beam indication at an NW, and other processes.

The downlink beam sweeping may include three processes, i.e., P1, P2, and P3. In the P1 process, a network device sweeps different transmit beams, and a UE sweeps different receive beams. In the P2 process, the network device sweeps different transmit beams, and the UE uses the same receive beam. In the P3 process, the network device uses the same transmit beam, and the UE sweeps different receive beams. Generally, the network device completes the above beam sweeping by transmitting a downlink reference signal. Optionally, the downlink reference signal may include, but is not limited to, a synchronization signal and physical broadcast channel (PBCH) block (SSB) and/or a channel state information-reference signal (CSI-RS).

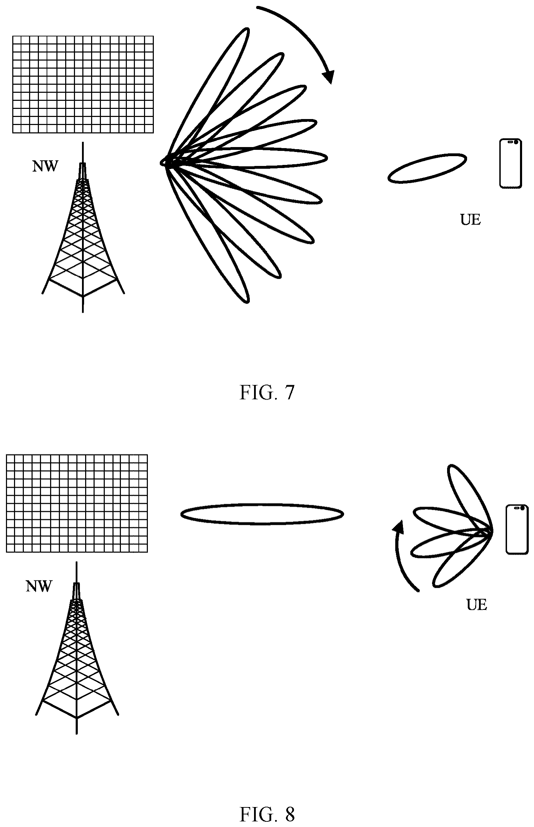

FIG. 6 is a schematic diagram of P1 process (also referred to as downlink full sweeping), FIG. 7 is a schematic diagram of P2 process, and FIG. 8 is a schematic diagram of P3 process.

As illustrated in FIG. 6, in the P1 process, a network device traverses all transmit beams to transmit downlink reference signals, and a UE side traverses all receive beams for measurement to determine corresponding measurement results.

As illustrated in FIG. 7, in the P2 process, a network device traverses all transmit beams to transmit downlink reference signals, and a UE side uses a specific receive beam for measurement to determine corresponding measurement results.

As illustrated in FIG. 8, in the P3 process, a network device can use a specific transmit beam to transmit downlink reference signals, and a UE side traverses all receive beams for measurement to determine corresponding measurement results.

A beam reporting mechanism in NR means that the UE selects K transmit beams with the highest layer1 reference signal receiving power (L1-RSRP) through measurement of multiple transmit beams (P2 process) or transmit-receive beam pairs (P1 process), and reports the *K* transmit beams and performance thereof to the NW through channel state information (CSI).

After decoding beam information reported by the UE, the NW takes a downlink transmission channel and a signal into consideration, and carries a transmission configuration indicator (TCI) state (including an SSB or CSI-RS resource index as the reference for the UE) in media access control (MAC) and/or downlink control information (DCI) signaling, to indicate the beam information to the UE. The UE performs downlink reception by using a receive beam corresponding to the transmit beam for the indicated SSB or CSI-RS.

Correspondingly, three uplink beam sweeping processes are also defined in NR, namely U1, U2, and U3. In the U1 process, the UE sweeps different transmit beams, and the NW sweeps different receive beams. In the U2 process, the UE uses the same transmit beam, and the NW sweeps different receive beams. In the U3 process, the UE sweeps different transmit beams, and the NW uses the same receive beam.

For the uplink beam sweeping, since the NW performs measurement on beams from the UE, the UE does not need to perform beam reporting. The NW selects from the measured uplink beams an uplink beam that is considered as suitable by the NW, and indicates or configures the uplink beam for the UE for uplink transmission. In addition, the NW also prepares a corresponding receive beam.

For better understanding of embodiments of the disclosure, artificial intelligence (Al)/machine learning (ML)-based beam management related to the disclosure will be described.

The AI/ML-based beam management may be spatial-domain downlink beam prediction or temporal beam prediction (also referred to as beam management case 2 (BM-Case2)).

Spatial-domain beam prediction (also referred to as beam management case 1 (BM-Case1)): spatial-domain downlink beam prediction for prediction dataset A (Set A) is performed based on measurement of beams in dataset B (Set B). Set B is a subset of Set A, or Set B and Set A are two different sets of beams. Set B can be understood as a partial subset of beams (pairs), and Set A can be understood as a full set of beams (pairs).

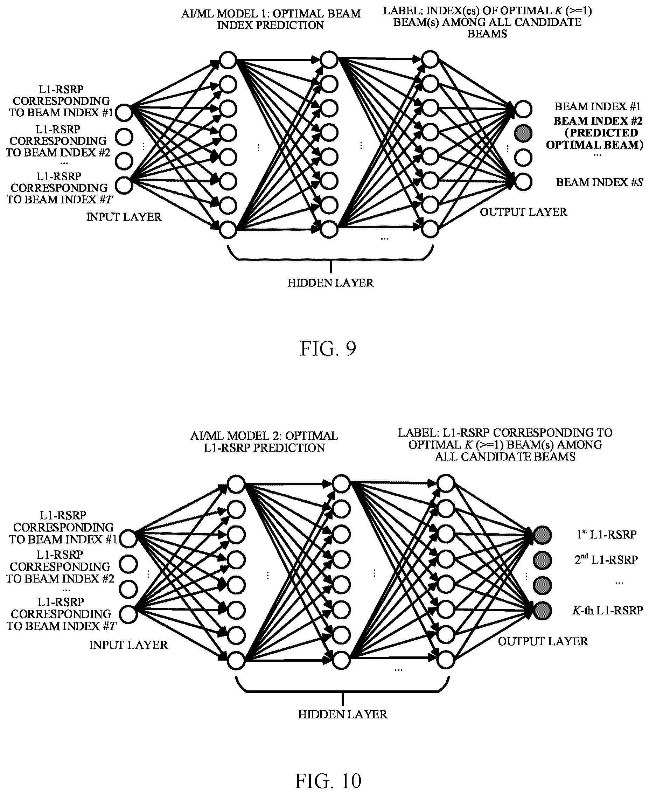

FIG. 9 schematically illustrates a relationship between an input and an output of a beam prediction model. This model solves a multi-category problem, i.e., a relationship between input L1-RSRP in a partial subset (i.e., Set B) and L1-RSRP of optimal K beams. In particular, a partial beam measurement set (i.e., Set B, which is part of measured L1-RSRP of a full set Set A) serves as the input to this model. The output is indexes of optimal *K* beams, i.e., *K* beams with the highest L1-RSRP, selected from the full set Set A. The label used for this model is the indexes of the measured optimal K beams (i.e., the K beams with the highest L1-RSRP) in the full set Set A. Specifically, as illustrated in FIG. 9, measurement dataset B (Set B) includes L1-RSRP corresponding to *T* beam indexes, prediction dataset A (Set A) includes S beam indexes, and AI/ML model 1 predicts the index(es) of the optimal K beam(s) (beam index #2 in FIG. 9). It may be noted that, the term "beam" in FIG. 9 may also be replaced with a "beam pair", and the specific description thereof is similar to the description of the beam, which will not be repeated herein.

FIG. 10 schematically illustrates an optimal beam quality prediction model, which can be understood as a linear regression problem. A relationship between an input and an output of the model is a relationship between input L1-RSRP in a partial subset (i.e., Set B) and L1-RSRP of optimal K beams. The model of FIG. 10 is the same as the beam prediction model of FIG. 9 in terms of the input, and the model of FIG. 10 differs from the model of FIG. 9 in that the output of the model of FIG. 10 is optimal *K* (*K >=* 1) L1-RSRP. The label is measured optimal *K* L1-RSRP in a full set (i.e., Set A) and corresponding *K* beam index(es). Specifically, as illustrated in FIG. 10, measurement dataset B (Set B) includes L1 -RSRP corresponding to *T* beam indexes, prediction dataset A (Set A) includes L1-RSRP corresponding to S beam indexes, and AI/ML model 2 predicts the optimal *K* (*K* >= 1) L1 -RSRP. It may be noted that, the term "beam" in FIG. 10 may also be replaced with a "beam pair", and the specific description thereof is similar to the description of the beam, which will not be repeated herein.

Temporal beam prediction (also referred to as BM-Case2): temporal downlink beam prediction for prediction dataset A (Set A) is performed based on historical measurement of beams in dataset B (Set B). Set B is a subset of Set A, or is the same as Set A, or is a subset of Set A. Set B can be understood as a partial subset of beams (pairs), and Set A can be understood as a full set of beams (pairs).

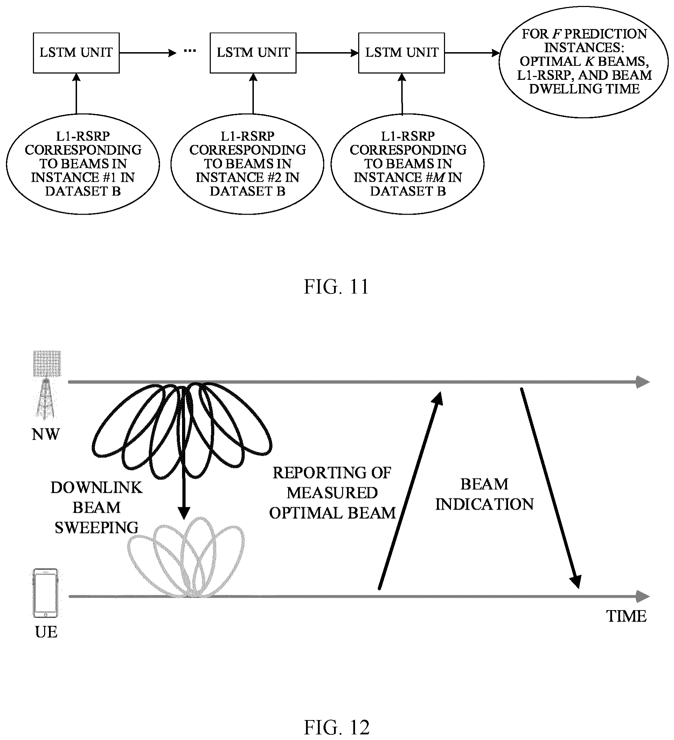

Taking the prediction of a temporal beam (pair) and performance thereof as an example, an LSTM model illustrated in FIG. 11 is adopted. The LSTM model can be interpreted temporally as extended *M* instances as the input, which is equivalent to cascading *M* LSTM units. The input to each LSTM unit is L1-RSRP of beams (pairs) in instance *m* (Set B*m*) in dataset B, where 1 ≤ *m* ≤ *M.*

It may be noted that, indexes of the beams (pairs) in Set Bm can be implicitly input in a fixed ordering of L1-RSRP. After receiving the performance of the *M* instances, the LSTM model can predict optimal beams (pairs), performance (i.e., link quality information) of the optimal beams (pairs), and dwelling time of the optimal beams (pairs) for next F instances.

For better understanding of embodiments of the disclosure, problems solved in the disclosure will be described.

For the beam sweeping in NR, the sweeping of a large number of downlink spatial beams (pairs) may result in a lot of reference signal overhead and measurement latency. For example, it is assumed that the NW deploys 64 different downlink transmit directions (carried in a maximum of 64 SSBs) in FR2, the UE uses multiple antenna panels (where there may be only one receive beam panel) for simultaneous sweeping of receive beams, and each antenna panel has 4 receive beams. The UE needs to measure at least 256 (64*4 = 256) beam pairs. Correspondingly, downlink resource overhead of 256 resources is required, and the sweeping needs to take approximately 80 milliseconds (ms) (one SSB period is 20 ms, a total of 4 periods are required). Therefore, use cases of spatial-domain and temporal beam (pair) prediction are defined in the NR evolution. Similarly, the uplink beam sweeping also faces the same problem of overhead and latency.

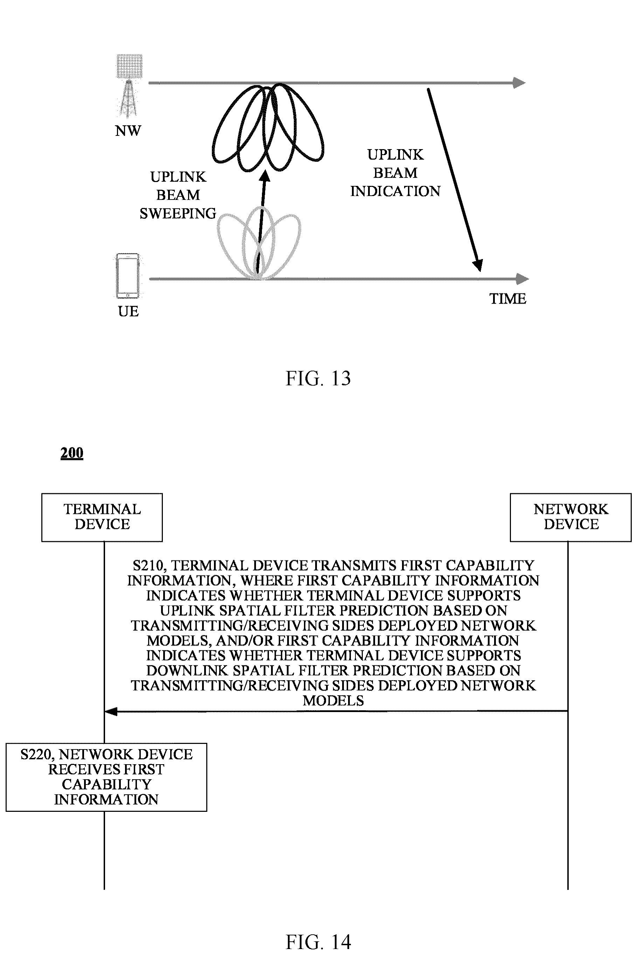

Specifically, in an NR system, the downlink beam management may include downlink beam sweeping, optimal beam reporting at a terminal side, downlink beam indication at a network side, and other processes, as illustrated in FIG. 12. The uplink beam management may include uplink beam sweeping, uplink beam indication at the network side, and other processes, as illustrated in FIG. 13. Specifically, for the downlink beam management, a network device sweeps all transmit beam directions through downlink reference signals, and a terminal device can use different receive beams for measurement, so that all beam pairs can be traversed. For the uplink beam management, the terminal device sweeps all transmit beam directions through uplink reference signals, and the network device can use different receive beams for measurement, so that all beam pairs can be traversed.

Therefore, in the uplink beam management and the downlink beam management, all combinations of transmit beams and receive beams need to be traversed to select an optimal beam, resulting in a lot of overhead and latency.

All the use cases defined in NR reduce overhead and latency for the downlink beam sweeping, and certain signaling overhead is still required for the NW to indicate uplink and downlink beams to be used for the UE. There is no optimization on the uplink beam sweeping. Therefore, in this disclosure, AI/ML models are deployed at both UE and NW sides, and both sides can predict an optimal beam. In this way, overhead for beam indication can be eliminated, and beam alignment can be achieved without beam indication, thereby reducing overhead and latency for uplink spatial filter management and/or downlink spatial filter management.

Based on the above problems, a beam (pair) prediction scheme based on the AI/ML models is proposed and designed in the disclosure. The terminal device can support uplink spatial filter prediction based on transmitting and receiving sides deployed network models, and/or the terminal device can support downlink spatial filter prediction based on the transmitting and receiving sides deployed network models, thereby reducing overhead and latency for uplink spatial filter management and/or downlink spatial filter management.

In embodiments of the disclosure, the AI/ML models deployed at both sides (the NW side and the UE side) are used for uplink and downlink beam (pair) prediction. The following technical effect is achieved: uplink and downlink beams at both sides can achieve beam alignment (an optimal transmit beam corresponds to a suitable receive beam) without beam indication (signaling from the NW to the UE). The biggest advantage of doing so is to reduce or even eliminate overhead for beam indication.

It may be noted that, the literal meaning of a "beam (pair)" is a "beam" or a "beam pair". Specifically, in embodiments of the disclosure, the beam may refer to a transmit beam or a receive beam, and the beam pair may refer to a pair of transmit beam and receive beam. In embodiments of the disclosure, the implementation-oriented word "beam" is replaced with the term "spatial filter". For the AI/ML models, the output can be understood as inference or prediction. In this disclosure, inference and prediction have the same meaning and can be interchangeable.

For better understanding of the technical solutions of embodiments of the disclosure, the technical solutions of embodiments of the disclosure will be elaborated below. The related art below, as an optional scheme, can be arbitrarily combined with the technical solutions of embodiments of the disclosure, which shall all belong to the protection scope of embodiments of the disclosure. Embodiments of the disclosure include at least part of the following.

FIG. 14 is a schematic flowchart of a wireless communication method 200 according to embodiments of the disclosure. As illustrated in FIG. 14, the wireless communication method 200 may include at least part of the following.

S210, a terminal device transmits first capability information. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

S220, a network device receives the first capability information.

In some embodiments of the disclosure, a spatial filter may also be referred to as a beam, a beam pair, a spatial relation, spatial setting, a spatial-domain filter, or the like. Alternatively, the spatial filter may also be referred to as a reference signal.

In some embodiments, a transmit spatial filter may also be referred to as a transmit (Tx) beam or a transmitting-end spatial-domain filter, and the above terms may be replaced with one another. A receive spatial filter may also be referred to as a receive (Rx) beam or a receiving-end spatial-domain filter, and the above terms may be replaced with one another. A combination of the transmit spatial filter and the receive spatial filter may also be referred to as a beam pair (i.e., a pair of Tx beam and Rx beam), a spatial filter pair, or a spatial filter group, and the above terms may be replaced with one another.

In some embodiments, identity information of the spatial filter may be an index or identity (ID) of the spatial filter.

For example, identity information of the transmit spatial filter may be an index or ID of the transmit spatial filter.

For another example, identity information of the receive spatial filter may be an index or ID of the receive spatial filter.

For another example, identity information of the combination of the transmit spatial filter and the receive spatial filter may be an index of the combination.

In embodiments of the disclosure, in the case where the terminal device supports uplink spatial filter prediction based on the transmitting and receiving sides deployed network models, AI/ML models can be deployed at both transmitting and receiving sides (the NW side and the UE side) for uplink beam (pair) prediction. Alternatively, in the case where the terminal device supports downlink spatial filter prediction based on the transmitting and receiving sides deployed network models, AI/ML models can be deployed at both transmitting and receiving sides (the NW side and the UE side) for downlink beam (pair) prediction. The following technical effect is achieved: uplink and downlink beams at both transmitting and receiving sides (the NW side and the UE side) can achieve beam alignment (an optimal transmit beam corresponds to a suitable receive beam) without beam indication (signaling from the NW to the UE). The biggest advantage of doing so is to reduce or even eliminate overhead for beam indication.

It may be noted that in embodiments of the disclosure, a downlink beam (pair) may refer to a downlink beam, or may refer to a downlink beam pair, where the downlink beam may be a downlink transmit beam or a downlink receive beam, and the downlink beam pair may be a pair of the downlink transmit beam and the downlink receive beam. Similarly, an uplink beam (pair) may refer to an uplink beam, or may refer to an uplink beam pair, where the uplink beam may be an uplink transmit beam or an uplink receive beam, and the uplink beam pair may be a pair of the uplink transmit beam and the uplink receive beam.

In some embodiments, in the case where the terminal device supports downlink spatial filter prediction based on the transmitting and receiving sides deployed network models, a first network model is deployed at a terminal device side, and a second network model is deployed at a network device side. That is, the terminal device can perform downlink spatial filter prediction based on the first network model, and the network device can perform downlink spatial filter prediction based on the second network model.

Specifically, the first network model is configured to output a first prediction dataset based on an input of a first measurement dataset. In other words, the terminal device inputs the first measurement dataset to the first network model to output the first prediction dataset. The first measurement dataset includes at least one of: link quality information measured based on a first downlink-reference-signal measurement set, or an index of a downlink-reference-signal resource corresponding to the link quality information measured based on the first downlink-reference-signal measurement set. The first prediction dataset includes one of: identity information of *K*₁ predicted downlink receive spatial filters in a first downlink-reference-signal prediction set, or identity information of *K*₁ predicted downlink transmit spatial filters and *K*₁ predicted downlink receive spatial filters in the first downlink-reference-signal prediction set. *K*₁ is a positive integer.

Specifically, for example, the first measurement dataset includes the link quality information obtained through measurement based on the first downlink-reference-signal measurement set. The first prediction dataset includes one of: identity information of *K*₁ predicted downlink receive spatial filters in the first downlink-reference-signal prediction set, or identity information of *K*₁ predicted downlink transmit spatial filters and *K*₁ predicted downlink receive spatial filters in the first downlink-reference-signal prediction set.

Specifically, for another example, the first measurement dataset includes the link quality information measured based on the first downlink-reference-signal measurement set and the index of the downlink-reference-signal resource corresponding to the link quality information measured based on the first downlink-reference-signal measurement set. The first prediction dataset includes one of: identity information of *K*₁ predicted downlink receive spatial filters in the first downlink-reference-signal prediction set, or identity information of *K*₁ predicted downlink transmit spatial filters and *K*₁ predicted downlink receive spatial filters in the first downlink-reference-signal prediction set.

Specifically, the second network model is configured to output a second prediction dataset based on an input of a second measurement dataset. In other words, the network device inputs the second measurement dataset to the second network model to output the second prediction dataset. The second measurement dataset includes at least one of: the link quality information measured based on the first downlink-reference-signal measurement set, or the index of the downlink-reference-signal resource corresponding to the link quality information measured based on the first downlink-reference-signal measurement set. Alternatively, the second measurement dataset includes at least one of: link quality information measured based on a first uplink-reference-signal measurement set, or an index of an uplink-reference-signal resource corresponding to the link quality information measured based on the first uplink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set. *K*₁ is a positive integer.

Specifically, for example, the second measurement dataset includes the link quality information measured based on the first downlink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set.

Specifically, for another example, the second measurement dataset includes the link quality information measured based on the first downlink-reference-signal measurement set and the index of the downlink-reference-signal resource corresponding to the link quality information measured based on the first downlink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set.

Specifically, for example, the second measurement dataset includes the link quality information measured based on the first uplink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set.

Specifically, for another example, the second measurement dataset includes the link quality information measured based on the first uplink-reference-signal measurement set and the index of the uplink-reference-signal resource corresponding to the link quality information measured based on the first uplink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set.

In this embodiment, identity information of a downlink spatial filter can be represented by an index of a downlink-reference-signal resource. That is, the identity information of the *K*₁ downlink transmit spatial filters can be represented by an index of a predicted downlink-reference-signal resource (an index of a CSI-RS resource and/or an index of an SSB resource) in the first downlink-reference-signal prediction set.

In some embodiments, the first network model is an AI/ML model. Optionally, the first network model may be an AI/ML model for spatial-domain beam prediction, and the specific implementation may be illustrated in FIG. 9 or FIG. 10, or the specific implementation may be illustrated in FIG. 11.

In some embodiments, the second network model is an AI/ML model. Optionally, the second network model may be an AI/ML model for spatial-domain beam prediction, and the specific implementation may be illustrated in FIG. 9 or FIG. 10, or the specific implementation may be illustrated in FIG. 11.

In some embodiments, the link quality information includes at least one of: L1-RSRP, layer1 reference signal received quality (L1-RSRQ), layer1 signal to interference plus noise ratio (L1-SINR), or layer1 received signal strength indication (L1-RSS1).

In embodiments of the disclosure, the terminal device can perform downlink spatial filter prediction based on the first network model, and the network device can perform downlink spatial filter prediction based on the second network model, thereby reducing overhead for downlink beam (pair) prediction and improving performance of a beam management system.

Optionally, a downlink-reference-signal resource in the first downlink-reference-signal measurement set includes a CSI-RS resource and/or an SSB resource.

Optionally, a downlink-reference-signal resource in the second downlink-reference-signal measurement set includes a CSI-RS resource and/or an SSB resource.

It may be noted that, the CSI-RS resource may also be a non-zero power CSI-RS (NZP-CSI-RS) resource.

Optionally, an uplink-reference-signal resource in the first uplink-reference-signal measurement set includes a sounding reference signal (SRS) resource.

In some embodiments, the downlink-reference-signal resource in the first downlink-reference-signal measurement set is part or all of downlink-reference-signal resources in a first downlink-reference-signal resource set. Optionally, the first downlink-reference-signal resource set is configured by the network device, or the first downlink-reference-signal resource set is specified in a protocol.

In some embodiments, the uplink-reference-signal resource in the first uplink-reference-signal measurement set is part or all of uplink-reference-signal resources in a first uplink-reference-signal resource set. Optionally, the first uplink-reference-signal resource set is configured by the network device, or the first uplink-reference-signal resource set is specified in a protocol.

In some embodiments, a downlink-reference-signal resource in the first downlink-reference-signal prediction set is part or all of downlink-reference-signal resources in a second downlink-reference-signal resource set. Optionally, the second downlink-reference-signal resource set is configured by the network device, or the second downlink-reference-signal resource set is specified in a protocol.

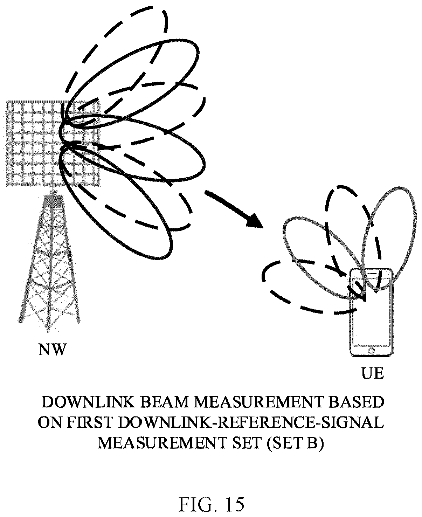

Specifically, for example, assuming that the first downlink-reference-signal measurement set is Set B and the first downlink-reference-signal prediction set is Set A, in order to implement downlink beam (pair) prediction of a UE-side model, the UE needs to measure downlink-reference-signal resources, i.e., CSI-RS resources and/or SSB resources, in Set B. Considering spatial-domain beam prediction (BM-Case1), the downlink-reference-signal resources in Set B may be a subset of downlink-reference-signal resources in Set A. As illustrated in FIG. 15, the UE measures the downlink-reference-signal resources in Set B to obtain the first measurement dataset. In FIG. 15, measured beams (i.e., indexes of the CSI-RS resources and/or indexes of the SSB resources) are represented by solid lines, and unmeasured beams (i.e., indexes of the CSI-RS resources and/or indexes of the SSB resources) are represented by dashed lines.

In some embodiments, when the first measurement dataset includes only the link quality information measured based on the first downlink-reference-signal measurement set, the link quality information measured based on the first downlink-reference-signal measurement set is input to the first network model in a first order. The first order is associated with an index of a downlink-reference-signal resource in the first downlink-reference-signal measurement set.

Specifically, for example, there are two main manners for the input to the first network model. One model input manner (first model input manner) is to input only link quality (such as L1-RSRP) of downlink reference signals in Set B in a fixed order (i.e., the first order). The other model input manner (second model input manner) is to input link quality (such as L1-RSRP) and indexes of downlink-reference-signal resources in Set B. An advantage of the second model input manner is that the selection from Set B is more flexible.

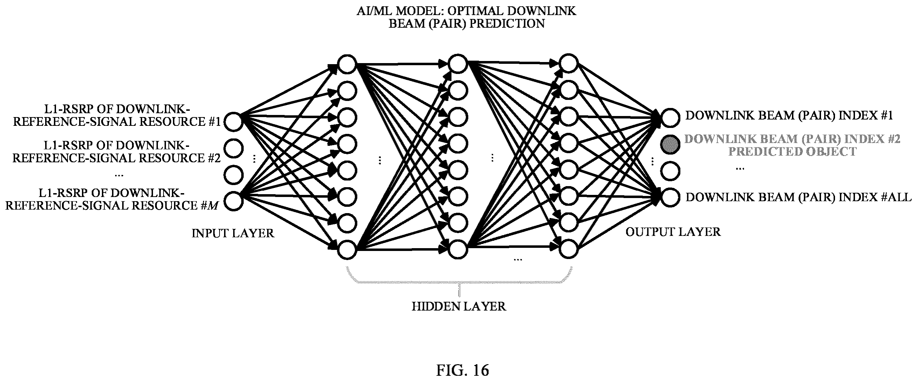

Specifically, in the first model input manner, the UE inputs the L1-RSRP (or other performance indicators, such as L1-SINR, L1-RSSI, or L1-RSRQ) of measured downlink-reference-signal resources (CSI-RS resources and/or SSB resources) in Set B in a fixed order (i.e., the first order) to the model (the first network model), as illustrated in FIG. 16. The output is indexes of optimal *K*₁ downlink beams (pairs) predicted by the model (the first network model), and in FIG. 16, *K*₁ = 1.

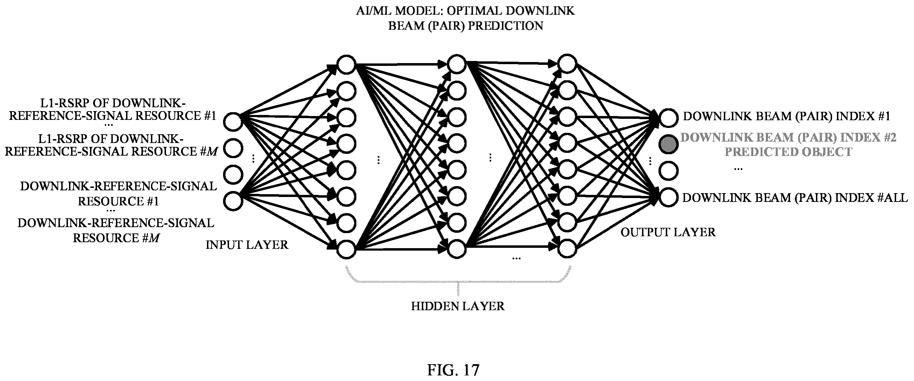

Specifically, in the second model input manner, the UE inputs the L1-RSRP of measured downlink-reference-signal resources (CSI-RS resources and/or SSB resources) in Set B and indexes of downlink-reference-signal resources (CSI-RS resources and/or SSB resources) in Set B to the model, as illustrated in FIG. 17. This differs from FIG. 16 in that indexes of *M* downlink-reference-signal resources (CSI-RS resources and/or SSB resources) and corresponding *M* link quality, such as L1-RSRP, are used as the input to the model (the first network model). An advantage is that the UE can perform measurement more flexibly and does not need to use the same input for each measurement. Similarly, the output of the model (the first network model) is indexes of optimal *K*₁ downlink beams (pairs) predicted, and in FIG. 17, *K*₁ = 1.

In some embodiments, when the second measurement dataset includes at least one of: the link quality information measured based on the first downlink-reference-signal measurement set, or the index of the downlink-reference-signal resource corresponding to the link quality information measured based on the first downlink-reference-signal measurement set, information in the second measurement dataset is measured by the terminal device and reported to a network device. Optionally, the second network model is the same as the first network model.

Specifically, in order to implement downlink beam (pair) prediction of an NW-side model (i.e., the second network model), the UE needs to report to the NW the measurement result obtained through measurement on Set B, as the input to the NW-side model (i.e., the second network model). In this embodiment, the UE-side model (the first network model) is the same as the NW-side model (the second network model), and since the inputs to the two models are also the same, downlink beam (pair) prediction results output by the UE-side model and the NW-side model are also consistent. The output of the NW-side model (the second network model) is optimal *K*₁ downlink transmit beams and optimal *K*₁ downlink receive beams (i.e., downlink beam pairs). The downlink transmit beams are used by the NW for downlink beamforming. The downlink receive beams are not used at the NW side because the UE is responsible for prediction and use of the downlink receive beams in prediction of dual models (models at both sides).

In some embodiments, part or all of the information in the second measurement dataset is measured by the terminal device and reported to the network device at one time, or part or all of the information in the second measurement dataset is measured by the terminal device and reported to the network device multiple times. Optionally, the number of reporting times can be determined by the terminal device or indicated by the network device.

In some embodiments, in the case where the terminal device reports only the link quality information measured based on the first downlink-reference-signal measurement set, the index of the downlink-reference-signal resource corresponding to the link quality information measured based on the first downlink-reference-signal measurement set is determined based on a reporting order. The reporting order is associated with an index of a downlink-reference-signal resource in the first downlink-reference-signal measurement set.

Specifically, for example, the UE can report an index of a CSI-RS resource and/or an SSB resource and corresponding link quality information, for example, L1-RSRP including absolute-value L1-RSRP and differential L1-RSRP, and a reporting format may be illustrated in Table 1. Specifically, information reported by the UE includes a CSI-RS resource indicator (CRI) (i.e., the index of the CSI-RS resource) or an SSB resource indicator (SSBRI) (i.e., the index of the SSB resource). Certainly, the UE can also report L1-RSRP corresponding to the CRI or SSBRI, as illustrated in Table 1. Optionally, in one reporting, the UE can only report a maximum of 4 resource indexes and corresponding link quality.

**Table 1: reporting downlink reference signals as uplink receive beams**

| **CSI report number** | **CSI fields** |
|---|---|
| CSI report #n | CRI or SSBRI #1, if reported |
| | CRI or SSBRI #2, if reported |
| | CRI or SSBRI #3, if reported |
| | CRI or SSBRI #4, if reported |
| | L1-RSRP #1, if reported |
| | Differential L1-RSRP #2, if reported |
| | Differential L1-RSRP #3, if reported |
| | Differential L1-RSRP #4, if reported |

It may be noted that in Table 1 above, L1-RSRP corresponding to CRI or SSBRI #1 is L1-RSRP #1, L1-RSRP corresponding to CRI or SSBRI #2 is L1-RSRP #2, L1-RSRP corresponding to CRI or SSBRI #3 is L1-RSRP #3, L1-RSRP corresponding to CRI or SSBRI #4 is L1-RSRP #4, Differential L1-RSRP #2 may be a difference between L1-RSRP #2 and L1-RSRP #1, Differential L1-RSRP #3 may be a difference between L1-RSRP #3 and L1-RSRP #1, and Differential L1-RSRP #4 may be a difference between L1-RSRP #4 and L1-RSRP #1.

Optionally, in one reporting of a Set B measurement result, the maximum number of resource indexes reported by the UE every time increases from 4 to 16, 32, or even 64.

Specifically, for example, the UE can break down the measurement on Set B for reporting multiple times. For example, for Set B with 32 measurement results, the 32 measurement results can be broken down into 8 groups for reporting, where each group contains 4 resource indexes and link quality obtained through downlink measurement.

Specifically, for example, resource indexes are omitted during reporting. The UE reports only L1-RSRP values corresponding to respective resource indexes in a resource configuration order of Set B. Since Set B is configured by the NW, even if indexes of all resources in Set B are input to the model, it cannot provide any additional information to the NW.

In some embodiments, when the second measurement dataset includes only the link quality information measured based on the first downlink-reference-signal measurement set, the link quality information measured based on the first downlink-reference-signal measurement set is input to the second network model in a second order. The second order is associated with an index of a downlink-reference-signal resource in the first downlink-reference-signal measurement set.

Specifically, for example, there are two main manners for the input to the second network model. One model input manner (first model input manner) is to input only link quality (such as L1-RSRP) of downlink-reference-signal resources (CSI-RS resources and/or SSB resources) in Set B in a fixed order (i.e., the second order). The other model input manner (second model input manner) is to input link quality (such as L1-RSRP) and indexes of downlink-reference-signal resources (CSI-RS resources and/or SSB resources) in Set B. An advantage of the second model input manner is that the selection from Set B is more flexible.

Specifically, in the first model input manner, the NW inputs the L1-RSRP (or other performance indicators, such as L1-SINR, L1-RSSI, or L1-RSRQ) of measured downlink-reference-signal resources (CSI-RS resources and/or SSB resources) in Set B in a fixed order (i.e., the second order) to the model (the second network model), as illustrated in FIG. 16. The output is indexes of optimal *K*₁ downlink beams (pairs) predicted by the model (the second network model), and in FIG. 16, *K*₁ = 1. That is, the first network model is the same as the second network model.

Specifically, in the second model input manner, the NW inputs the L1-RSRP of measured downlink-reference-signal resources (CSI-RS resources and/or SSB resources) in Set B and indexes of downlink-reference-signal resources (CSI-RS resources and/or SSB resources) in Set B to the model, as illustrated in FIG. 17. This differs from FIG. 16 in that indexes of *M* downlink-reference-signal resources (CSI-RS resources and/or SSB resources) and corresponding *M* link quality, such as L1-RSRP, are used as the input to the model (the second network model). An advantage is that the UE can perform measurement more flexibly and does not need to use the same input for each measurement. Similarly, the output of the model (the second network model) is indexes of optimal *K*₁ downlink beams (pairs) predicted, and in FIG. 17, *K*₁ = 1. That is, the first network model is the same as the second network model.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, information in the second measurement dataset is obtained through measurement by the network device. Specifically, in this embodiment, the terminal device can support uplink beam (pair) sweeping, and the second network model is different from the first network model. Since different reference signal sets are input to the UE-side model (the first network model) and the NW-side model (the second network model), parameters of respective nodes may be different, and the UE-side model and the NW-side model can be understood as 2 different downlink beam (pair) prediction models. However, a prediction result of the UE-side model is roughly aligned with a prediction result of the NW-side model, that is, a transmit beam predicted at the NW side corresponds to a receive beam predicted at the UE side, where there may be a higher L1-RSRP. Optionally, the first network model and the second network model can be trained synchronously.

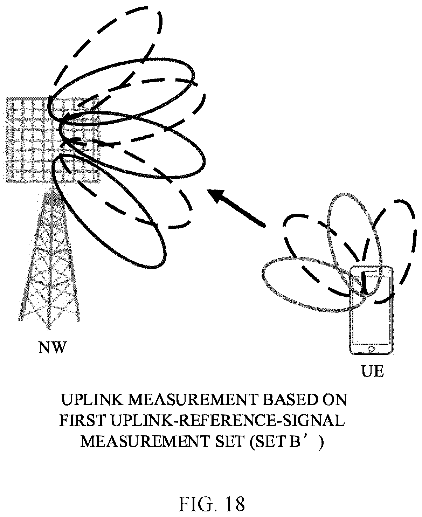

Specifically, assuming that the first uplink-reference-signal measurement set is Set B', in order to implement downlink beam (pair) prediction of the NW-side model (the second network model), the UE needs to perform uplink beam sweeping, i.e., transmit an SRS in Set B' to cause the NW to perform uplink measurement and use the measurement result as the input to the NW-side model (the second network model). For example, the UE transmits an SRS in Set B', and the uplink beam sweeping is illustrated in FIG. 18. In FIG. 18, measured beams (i.e., indexes of SRS resources) are represented by solid lines, and unmeasured beams (i.e., indexes of SRS resources) are represented by dashed lines.

In some embodiments, an uplink-reference-signal resource in the first uplink-reference-signal measurement set is determined based on the identity information of the *K*₁ downlink receive spatial filters predicted by the terminal device. For example, during the subsequent uplink beam sweeping (for example, including beam sweeping of Set B'), a beam selected for uplink sweeping can be adjusted according to an optimal downlink receive beam predicted by the model. For example, an uplink transmit direction of high power SRS-RSRP with a higher possibility is selected for sweeping.

In some embodiments, an uplink-reference-signal resource in the first uplink-reference-signal measurement set is configured by a network. Specifically, for example, for fixed Set B' (in a beam transmit direction) configured by the NW, the UE does not adjust according to a predicted downlink receive beam.

In some embodiments, when the second measurement dataset includes only the link quality information measured based on the first uplink-reference-signal measurement set, the link quality information measured based on the first uplink-reference-signal measurement set is input to the second network model in a third order. The third order is associated with an index of an uplink-reference-signal resource in the first uplink-reference-signal measurement set.

Specifically, for example, there are two main manners for the input to the second network model. One model input manner (first model input manner) is to input only link quality (such as L1-RSRP) of uplink reference signals in Set B' in a fixed order (i.e., the third order). The other model input manner (second model input manner) is to input link quality (such as L1-RSRP) and indexes of uplink-reference-signal resources in Set B'. An advantage of the second model input manner is that the selection from Set B' is more flexible.

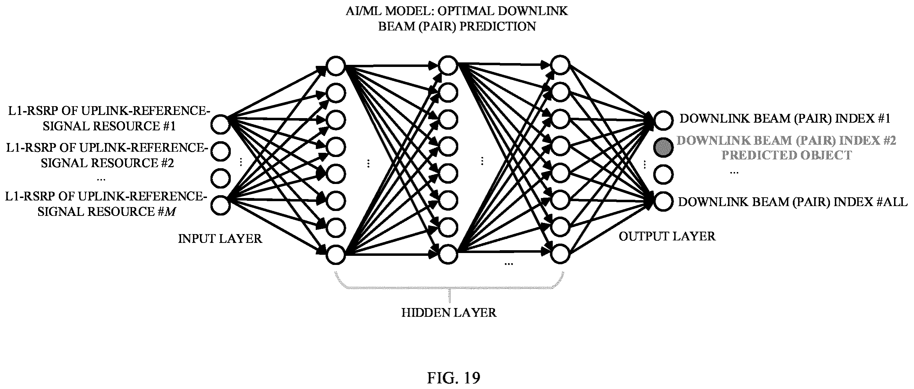

Specifically, in the first model input manner, the NW inputs the L1-RSRP (or other performance indicators, such as L1-SINR, L1-RSSI, or L1-RSRQ) of measured uplink-reference-signal resources (SRS resources) in Set B' in a fixed order (i.e., the first order) to the model (the second network model), as illustrated in FIG. 19. The output is indexes of optimal *K*₁ downlink beams (pairs) predicted by the model (the second network model), and in FIG. 19, *K*₁ *=* 1. That is, the first network model is different from the second network model.

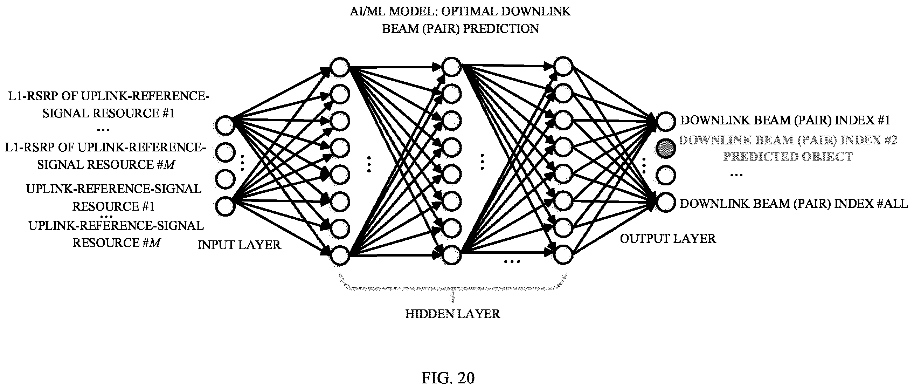

Specifically, in the second model input manner, the NW inputs the L1-RSRP of measured uplink-reference-signal resources (SRS resources) in Set B' and indexes of uplink-reference-signal resources (SRS resources) in Set B' to the model, as illustrated in FIG. 20. This differs from FIG. 19 in that indexes of *M* uplink-reference-signal resources (SRS resources) and corresponding *M* link quality, such as L1-RSRP, are used as the input to the model (the second network model). An advantage is that the NW can perform measurement more flexibly and does not need to use the same input for each measurement. Similarly, the output of the model (the second network model) is indexes of optimal *K*₁ downlink beams (pairs) predicted, and in FIG. 20, *K*₁ = 1. That is, the first network model is different from the second network model.

In some embodiments, predicted downlink spatial filter information does not need to be exchanged between the terminal device and the network device. The terminal device performs downlink reception based on the identity information of the *K*₁ downlink receive spatial filters after a first duration, and the network device performs downlink transmission based on the identity information of the *K*₁ downlink transmit spatial filters after the first duration.

Optionally, the first duration may be one or more time units. The time unit is one of: a slot, a symbol, a mini slot, a subframe, a frame, a second, a millisecond, and a microsecond.

Specifically, for example, the output of the UE-side model is an optimal downlink receive beam, which is adapted to a downlink (DL) beam indication free system. The technical reason is that for reception of a downlink channel and signal, the UE does not need to know a transmit beam predicted at the NW side and needs to know only a corresponding downlink receive beam. This solution is suitable for a scenario where the NW side and the UE side use different beam prediction models, that is, the NW predicts a beam the NW uses, and the UE predicts a beam the UE uses.

Specifically, for example, when the UE performs uplink beam sweeping on Set B', the output of the NW-side model is an optimal downlink transmit beam, which is adapted to a DL beam indication free system. The technical reason is that for transmission of a downlink channel and signal, the NW does not need to know a receive beam at the UE side and needs to know only a corresponding downlink transmit beam.

In some embodiments, the terminal device receives first indication information from the network device. The first indication information indicates identity information of a downlink transmit spatial filter and identity information of a downlink receive spatial filter to be used among the identity information of the *K*₁ downlink transmit spatial filters and the identity information of the *K*₁ downlink receive spatial filters.

In some embodiments, the first indication information may be carried in at least one of: radio resource control (RRC) signaling, DCI, or media access control control-element (MAC CE) signaling.

Specifically, for example, the NW can use a traditional TCI state or a unified TCI state for downlink beam indication. The core content of this indication is a quasi-co-located (QCL) relation between downlink reference signals, which includes a QCL relation between a downlink reference signal (for example, a CSI-RS or SSB reported by the UE) on a particular band width part (BWP) in a particular component carrier (CC) and a physical downlink shared channel (PDSCH) demodulation reference signal (DMRS), a QCL relation between the downlink reference signal and a physical downlink control channel (PDCCH) DMRS, and a QCL relation between the downlink reference signal and a CSI-RS.

Specifically, for example, if the NW predicts an optimal downlink transmit beam and the UE side predicts an optimal downlink receive beam, or both UE and NW sides predict a downlink transmit-receive beam pair (using respective desired parts), where the optimal transmit beam correspond to the optimal receive beam, then the NW does not need to perform beam indication for the UE, and each side can directly use corresponding transmit and receive beams during channel and signal transmission, which is referred to as a beam indication free scheme in this embodiment. This scheme is applicable to a scenario where the models predict the optimal downlink transmit-receive beam pair from *K*₁ (*K*₁ = 1 or *K*₁ > 1) downlink transmit-receive beam pair(s).

Specifically, for example, for optimal *K*₁ (*K*₁ > 1) downlink transmit-receive beam pairs predicted by the models, the NW does not necessarily use the best one among the *K*₁ beam pairs due to restrictions of other factors, such as scheduling restrictions, the NW still needs to simply indicate the downlink beam to the UE, which can be done by replacing TCI state IDs with indexes of the *K*₁ downlink beam pairs. Since the range of beam indication is narrowed down to one of the optimal *K*₁ beam pairs, overhead for downlink beam indication is accordingly reduced compared with indication of TCI states. It may be noted that, the above beam pairs include beam pairs predicted respectively by the NW and UE with the same model, and also include beam pairs predicted respectively by the NW and UE with different models (where the NW predicts downlink transmit beams, and the UE predicts downlink receive beams).

In some embodiments, the terminal device receives first prediction information from the network device. The first prediction information includes identity information of a downlink spatial filter predicted by the second network model. The terminal device monitors prediction performance of the first network model and/or prediction performance of the second network model according to identity information of the downlink spatial filter predicted by the first network model and the identity information of the downlink spatial filter predicted by the second network model.

Specifically, the terminal device can periodically monitor the prediction performance of the first network model and/or the prediction performance of the second network model.

In some embodiments, when the performance of the first network model and/or the performance of the second network model is poor (for example, the prediction accuracy in a period of time is lower than a threshold), the first network model and/or the second network model is updated, or a network model(s) is re-selected.

In some embodiments, the first prediction information may be carried in at least one of: RRC signaling, DCI, or MAC CE signaling.

In some embodiments, the terminal device transmits second prediction information to the network device. The second prediction information includes identity information of a downlink spatial filter predicted by the first network model, and the identity information of the downlink spatial filter predicted by the first network model is used for the network device to monitor prediction performance of the first network model and/or prediction performance of the second network model. That is, the network device monitors the prediction performance of the first network model and/or the prediction performance of the second network model according to the identity information of the downlink spatial filter predicted by the first network model and identity information of the downlink spatial filter predicted by the second network model.

In some embodiments, the second prediction information may be carried in at least one of: RRC signaling, uplink control information (UCI), or MAC CE signaling.

Specifically, for downlink beam pair prediction of dual AI/ML models, the UE-side model predicts optimal K downlink beam pairs in a prediction set Set A, and the NW side can also predict optimal K downlink beam pairs in the prediction set Set A by using the other different model (with an uplink measurement set Set B' as the input). If the downlink beam pairs predicted by the two models are consistent (for example, IDs of the K beam pairs are completely or partially the same), then it can be considered that the two different models both make accurate inferences, and otherwise it is considered that at least one of the two models at both sides makes inaccurate inferences. Based on the above criteria, there are two feasible methods for monitoring the accuracy of beam pair prediction. The first is that the NW side can inform the UE side of a beam pair inference result of the NW side, i.e., IDs of the optimal K downlink beam pairs, and then the UE compares the inference result of the NW side with an inference result of the UE. The second is that the UE side reports to the NW a beam pair inference result of the UE side, i.e., IDs of the optimal K downlink beam pairs, and then the NW compares the inference result of the UE side with an inference result of the NW. Therefore, the accuracy of the model inference is statistically calculated.

In some embodiments, the first capability information further includes, but is not limited to, at least one of: the maximum number of downlink-reference-signal measurement sets supported on all preconfigured CCs or all preconfigured BWPs, the maximum number of configured downlink-reference-signal measurement sets supported, the maximum number of downlink-reference-signal measurement sets supporting simultaneous measurement, the maximum number of downlink-reference-signal prediction sets supported on all the preconfigured CCs or all the preconfigured BWPs, the maximum number of uplink-reference-signal measurement sets supported on all the preconfigured CCs or all the preconfigured BWPs, the maximum number of configured uplink-reference-signal measurement sets supported, the maximum number of uplink-reference-signal measurement sets supporting simultaneous transmission, the maximum number of downlink-reference-signal measurement sets supported on one CC or one BWP, the maximum number of downlink-reference-signal resources in each of the downlink-reference-signal measurement sets supported, the maximum number of downlink-reference-signal prediction sets supported on one CC or one BWP, the maximum number of uplink-reference-signal measurement sets supported on one CC or one BWP, the maximum number of uplink-reference-signal resources in each of the uplink-reference-signal measurement sets supported, or the maximum value of K₁.

Specifically, before the NW configures for the UE a measurement resource required for a model, the UE needs to inform through capability reporting the NW whether the UE supports downlink beam (pair) prediction and uplink beam (pair) sweeping based on dual models. If the UE supports this feature, a capability reported by the UE includes, but is not limited to, at least one of: the maximum number of beam (pair) measurement sets (Set B) supported on all downlink CCs/BWPs, including the maximum number of configured measurement sets and the maximum number of measurement sets that can be simultaneously measured by the UE; the maximum number of beam (pair) prediction sets (Set A) supported on all the downlink CCs/BWPs; the maximum number of beam (pair) measurement sets (Set B') that can be transmitted on all uplink CCs/BWPs, including the maximum number of configured measurement sets and the maximum number of measurement sets that can be simultaneously transmitted by the UE; the maximum number of beam (pair) measurement sets supported on one downlink CC/BWP, i.e., *N*ₘₐₓ; the maximum number of downlink SSB resources and/or CSI-RS resources that can be measured in each measurement set Set B*ₙ* (1 *<= n <= N*); the maximum number of beam (pair) prediction sets supported on one downlink CC/BWP, i.e., *P*ₘₐₓ; the maximum number of beams (pairs) that can be predicted in each prediction set Set A*ₚ* (1 *<= p* <= *P*); the maximum number of beam (pair) measurement sets that can be transmitted on one uplink CC/BWP, i.e., *M*ₘₐₓ; or the maximum number of uplink SRS resources that can be transmitted in each measurement set Set B'*ₘ* (1 *<= m <= M*)*.*

In some embodiments, before the terminal device performs downlink spatial filter prediction based on the first network model, the terminal device receives first information from the network device. The first information is used for configuring at least one of: the first downlink-reference-signal measurement set or the first downlink-reference-signal prediction set. Alternatively, the first information is used for activating at least one of: the first downlink-reference-signal measurement set among multiple preconfigured downlink-reference-signal measurement sets or the first downlink-reference-signal prediction set among multiple preconfigured downlink-reference-signal prediction sets.

In some embodiments, the first information may be carried in at least one of: RRC signaling, DCI, or MAC CE signaling.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, the first information is further used for configuring the first uplink-reference-signal measurement set, or the first information is further used for activating the first uplink-reference-signal measurement set among multiple preconfigured uplink-reference-signal measurement sets.

Optionally, the NW configures and/or activates for the UE a measurement set Set B required for the model input. For example, the NW configures for the UE one or more Set B*ₙ* (1 *<= n <= N*) through RRC signaling. Set B*ₙ*, as a downlink beam (pair) measurement set, may include CSI-RS resources and/or SSB resources. For another example, if the NW configures multiple Set B*ₙ* (1 *<= n <= N*) for the UE, then the NW needs to further activate one of the multiple configured Set B through MAC CE signaling according to the actual deployment and antenna configuration. Otherwise, the UE uses only one configured Set B.

Optionally, the NW configures and/or activates for the UE a downlink beam (pair) prediction set Set A output by the model. For example, the NW configures for the UE one or more downlink beam (pair) prediction sets Set A*ₚ* (1 *<= p <= P*) through RRC signaling. Set A*ₚ*, as a beam (pair) prediction set, may include CSI-RS resources and/or SSB resources. For another example, if the NW configures multiple Set A*ₚ* (1 *<= p <= P*), then the NW needs to further activate one of the multiple configured Set A through MAC CE signaling according to the actual deployment and antenna configuration. Otherwise, only one configured Set A is used.

Optionally, the NW configures and/or activates for the UE a measurement set Set B' required for the model input. For example, the NW configures for the UE one or more Set B'*ₘ* (1 *<= m* <= *M*) through RRC signaling. Set B'*ₘ*, as an uplink beam (pair) measurement set, may include SRS resources. For another example, if the NW configures multiple B'*ₘ* (1 *<= m <= M*) for the UE, then the NW needs to further activate one of the multiple configured Set B' through MAC CE signaling according to the actual deployment and antenna configuration. Otherwise, the UE uses only one configured Set B'.

In some embodiments, if the UE supports beam (pair) prediction based on downlink dual Al models, and a model used for prediction at the UE side is a cell-specific model or a UE-specific model, then the NW will deliver to the UE the cell-specific model or the UE-specific model adapted to the actual deployment environment and the beam (pair) configuration at the NW and UE sides. Signaling for delivering this model may be signaling in the 3^{rd} generation partnership project (3GPP) framework, for example, the NW describes initial parameters of respective nodes and structures of one or more models based on an open format of RRC signaling. Next, the NW can indicate to the UE a dedicated model ID (an ID defined in the life cycle management of the model to identify a different model) through RRC or MAC CE or DCI. Another implementation is that the UE starts a model prepared by the UE in advance and optionally informs the NW of description information of the model, for example, by using an open format or a more concise model ID. In the process of model communication using the model ID, one of the most important assumptions is that the NW and the UE have a clear consensus and understanding of model details expressed by the model ID.

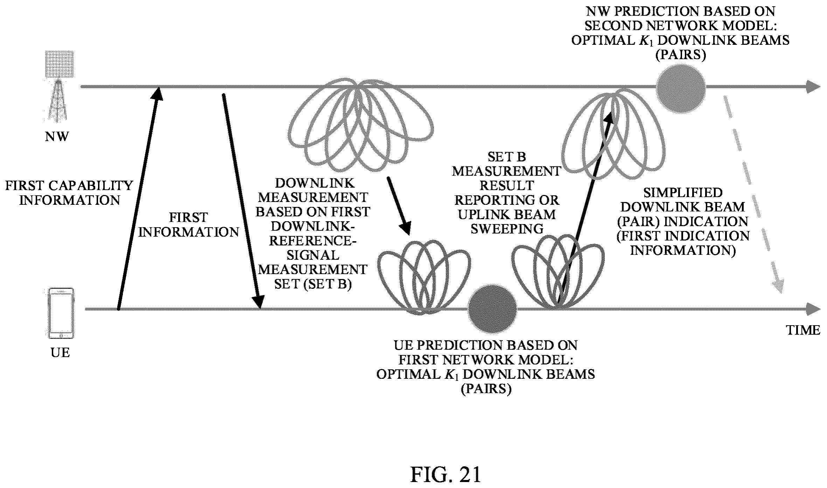

In some embodiments, in the case where the terminal device supports downlink spatial filter prediction based on the transmitting and receiving sides deployed network models, the overall process of downlink beam (pair) prediction of the dual AI/ML models may be illustrated in FIG. 21.

In some embodiments, in the case where the terminal device supports uplink spatial filter prediction based on the transmitting and receiving sides deployed network models, a third network model is deployed at a terminal device side, and a fourth network model is deployed at a network device side. That is, the terminal device can perform uplink spatial filter prediction based on the third network model, and the network device can perform uplink spatial filter prediction based on the fourth network model.

Specifically, the third network model is configured to output a third prediction dataset based on an input of a third measurement dataset. In other words, the terminal device inputs the third measurement dataset to the third network model to output the third prediction dataset. The third measurement dataset includes at least one of: link quality information measured based on a second uplink-reference-signal measurement set, or an index of an uplink-reference-signal resource corresponding to the link quality information measured based on the second uplink-reference-signal measurement set. Alternatively, the third measurement dataset includes at least one of: link quality information measured based on a second downlink-reference-signal measurement set, or an index of a downlink-reference-signal resource corresponding to the link quality information measured based on the second downlink-reference-signal measurement set. The third prediction dataset includes one of: identity information of *K*₂ predicted uplink transmit spatial filters in a first uplink-reference-signal prediction set, or identity information of *K*₂ predicted uplink transmit spatial filters and *K*₂ predicted uplink receive spatial filters in the first uplink-reference-signal prediction set. *K*₂ is a positive integer.

Specifically, for example, the third measurement dataset includes the link quality information measured based on the second uplink-reference-signal measurement set. The third prediction dataset includes one of: identity information of *K*₂ predicted uplink transmit spatial filters in the first uplink-reference-signal prediction set, or identity information of *K*₂ predicted uplink transmit spatial filters and *K*₂ predicted uplink receive spatial filters in the first uplink-reference-signal prediction set.

Specifically, for another example, the third measurement dataset includes the link quality information measured based on the second uplink-reference-signal measurement set and the index of the uplink-reference-signal resource corresponding to the link quality information measured based on the second uplink-reference-signal measurement set. The third prediction dataset includes one of: identity information of *K*₂ predicted uplink transmit spatial filters in the first uplink-reference-signal prediction set, or identity information of *K*₂ predicted uplink transmit spatial filters and *K*₂ predicted uplink receive spatial filters in the first uplink-reference-signal prediction set.

Specifically, for example, the third measurement dataset includes the link quality information measured based on the second downlink-reference-signal measurement set. The third prediction dataset includes one of: identity information of *K*₂ predicted uplink transmit spatial filters in the first uplink-reference-signal prediction set, or identity information of *K*₂ predicted uplink transmit spatial filters and *K*₂ predicted uplink receive spatial filters in the first uplink-reference-signal prediction set.

Specifically, for another example, the third measurement dataset includes the link quality information measured based on the second downlink-reference-signal measurement set and the index of the downlink-reference-signal resource corresponding to the link quality information measured based on the second downlink-reference-signal measurement set. The third prediction dataset includes one of: identity information of *K*₂ predicted uplink transmit spatial filters in the first uplink-reference-signal prediction set, or identity information of *K*₂ predicted uplink transmit spatial filters and *K*₂ predicted uplink receive spatial filters in the first uplink-reference-signal prediction set.

Specifically, the fourth network model is configured to output a fourth prediction dataset based on an input of a fourth measurement dataset. The network device outputs the fourth prediction dataset by inputting the fourth measurement dataset to the fourth network model. The fourth measurement dataset includes at least one of: the link quality information measured based on the second uplink-reference-signal measurement set, or the index of the uplink-reference-signal resource corresponding to the link quality information measured based on the second uplink-reference-signal measurement set. The fourth prediction dataset includes one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set. *K*₂ is a positive integer.

Specifically, for example, the fourth measurement dataset includes the link quality information measured based on the second uplink-reference-signal measurement set. The fourth prediction dataset includes one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set.

Specifically, for another example, the fourth measurement dataset includes the link quality information measured based on the second uplink-reference-signal measurement set and the index of the uplink-reference-signal resource corresponding to the link quality information measured based on the second uplink-reference-signal measurement set. The fourth prediction dataset includes one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set.

In this embodiment, identity information of an uplink spatial filter can be represented by an index of an uplink-reference-signal resource. That is, the identity information of the *K*₂ uplink transmit spatial filters can be represented by an index of a predicted uplink-reference-signal resource (an index of an SRS resource) in the first uplink-reference-signal prediction set.

In some embodiments, the third network model is an AI/ML model. Optionally, the third network model may be an AI/ML model for spatial-domain beam prediction, and the specific implementation may be illustrated in FIG. 9 or FIG. 10, or the specific implementation may be illustrated in FIG. 11.

In some embodiments, the fourth network model is an AI/ML model. Optionally, the fourth network model may be an AI/ML model for spatial-domain beam prediction, and the specific implementation may be illustrated in FIG. 9 or FIG. 10, or the specific implementation may be illustrated in FIG. 11.

In some embodiments, the link quality information includes at least one of: L1-RSRP, L1-RSRQ, L1-SINR, or L1-RSSI.

In embodiments of the disclosure, the terminal device can perform uplink spatial filter prediction based on the third network model, and the network device can perform uplink spatial filter prediction based on the fourth network model, thereby reducing overhead for uplink beam (pair) prediction and improving performance of a beam management system.

In some embodiments, an uplink-reference-signal resource in the second uplink-reference-signal measurement set at least includes an SRS resource.

In some embodiments, an uplink-reference-signal resource in the first uplink-reference-signal prediction set at least includes an SRS resource.

In some embodiments, a downlink-reference-signal resource in the second downlink-reference-signal measurement set includes a CSI-RS resource and/or an SSB resource. It may be noted that, the CSI-RS resource may also be an NZP-CSI-RS resource.

In some embodiments, the uplink-reference-signal resource in the second uplink-reference-signal measurement set is part or all of uplink-reference-signal resources in a second uplink-reference-signal resource set. Optionally, the second uplink-reference-signal resource set is configured by the network device, or the second uplink-reference-signal resource set is specified in a protocol.

In some embodiments, the downlink-reference-signal resource in the second downlink-reference-signal measurement set is part or all of downlink-reference-signal resources in a third downlink-reference-signal resource set. Optionally, the third downlink-reference-signal resource set is configured by the network device, or the third downlink-reference-signal resource set is specified in a protocol.

In some embodiments, the uplink-reference-signal resource in the first uplink-reference-signal prediction set is part or all of uplink-reference-signal resources in a third uplink-reference-signal resource set. Optionally, the third uplink-reference-signal resource set is configured by the network device, or the third uplink-reference-signal resource set is specified in a protocol.

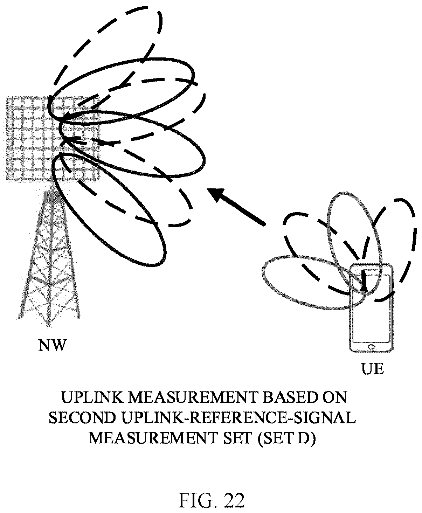

Specifically, for example, assuming that the second uplink-reference-signal measurement set is Set D and the first uplink-reference-signal prediction set is Set C, in order to implement uplink beam (pair) prediction of an NW-side model, the UE needs to transmit an uplink reference signal, i.e., an SRS resource, in the measurement set Set D. One or more SRS resource sets (i.e., Set D) are configured for "beam management". One SRS resource set (i.e., Set D) includes one or more SRS resources. Each SRS resource may be configured with spatial relation information, i.e., an uplink beam, which contains a downlink reference signal, i.e., a CSI-RS or an SSB. The UE uses a receive beam for the downlink reference signal as an uplink transmit beam. Alternatively, each SRS resource may be not configured with spatial relation information, and uplink transmit beam sweeping is performed completely according to the implementation of the UE. Considering spatial-domain beam prediction, beams (pairs) in Set D may be only a subset of all uplink beams (pairs). The basic principle is illustrated in FIG. 22, where the NW performs measurement on a partial beam measurement set Set D from the UE.

In some embodiments, when the third measurement dataset includes at least one of: the link quality information measured based on the second uplink-reference-signal measurement set, or the index of the uplink-reference-signal resource corresponding to the link quality information measured based on the second uplink-reference-signal measurement set, information in the third measurement dataset is measured by the network device and indicated to the terminal device. Optionally, the third network model is the same as the fourth network model.

Specifically, in order to implement uplink beam (pair) prediction of a UE-side model, the NW needs to transmit to the UE a measurement result obtained through uplink beam sweeping of Set D, to serve as the input to the UE-side model (i.e., the third network model). In this embodiment, the UE-side model (the third network model) is the same as the NW-side model (the fourth network model), and since the inputs to the two models are also the same, uplink beam (pair) prediction results output by the UE-side model and the NW-side model are also consistent. The output of the NW-side model (the fourth network model) is optimal *K*₂ uplink transmit beams and optimal *K*₂ uplink receive beams (i.e., uplink beam pairs). The uplink receive beams are used by the NW for uplink beamforming. The uplink transmit beams are not used at the NW side because the UE is responsible for prediction and use of the uplink transmit beams in prediction of dual models.

In some embodiments, part or all of the information in the third measurement dataset is measured by the network device and indicated to the terminal device at one time, or part or all of the information in the third measurement dataset is measured by the network device and indicated to the terminal device multiple times. Optionally, the number of reporting times can be determined by the network device, or the number of reporting times can be determined through negotiation between the terminal device and the network device.

In some embodiments, in the case where the network device indicates only the link quality information measured based on the second uplink-reference-signal measurement set, the index of the uplink-reference-signal resource corresponding to the link quality information measured based on the second uplink-reference-signal measurement set is determined based on an indication order. The indication order is associated with an index of an uplink-reference-signal resource in the second uplink-reference-signal measurement set.

Specifically, for example, the NW can indicate an index of an SRS resource and corresponding link quality information, for example, L1-RSRP including absolute-value L1-RSRP and differential L1-RSRP.

In some embodiments, when the third measurement dataset includes only the link quality information measured based on the second uplink-reference-signal measurement set, the link quality information measured based on the second uplink-reference-signal measurement set is input to the third network model in a fourth order. The fourth order is associated with an index of an uplink-reference-signal resource in the second uplink-reference-signal measurement set.

Specifically, for example, there are two main manners for the input to the third network model. One model input manner (first model input manner) is to input only link quality (such as L1-RSRP) of uplink-reference-signal resources in Set D in a fixed order (the fourth order). The other model input manner (second model input manner) is to input link quality (such as L1-RSRP) and indexes of uplink-reference-signal resources in Set D. An advantage of the second model input manner is that the selection from Set D is more flexible.

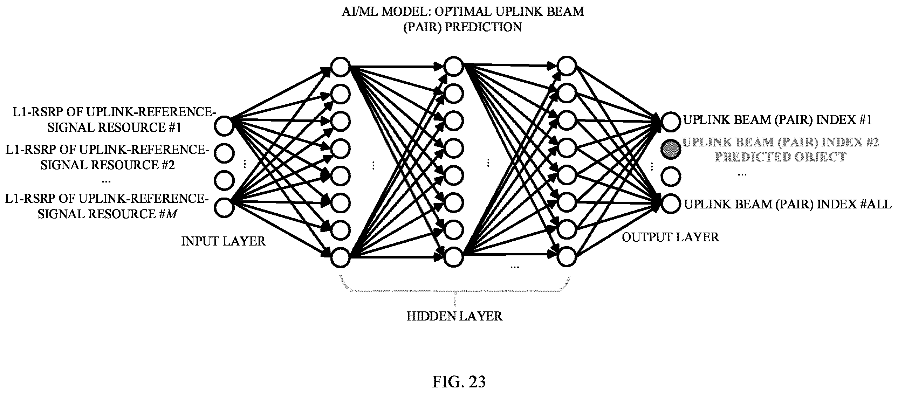

Specifically, in the first model input manner, the UE inputs the L1-RSRP (or other performance indicators, such as L1-SINR, L1-RSSI, or L1-RSRQ) of measured uplink-reference-signal resources (SRS resources) in Set D in a fixed order (i.e., the fourth order) to the model (the third network model), as illustrated in FIG. 23. The output is indexes of optimal *K*₂ uplink beams (pairs) predicted by the model (the third network model), and in FIG. 23, *K*₂ *=* 1.

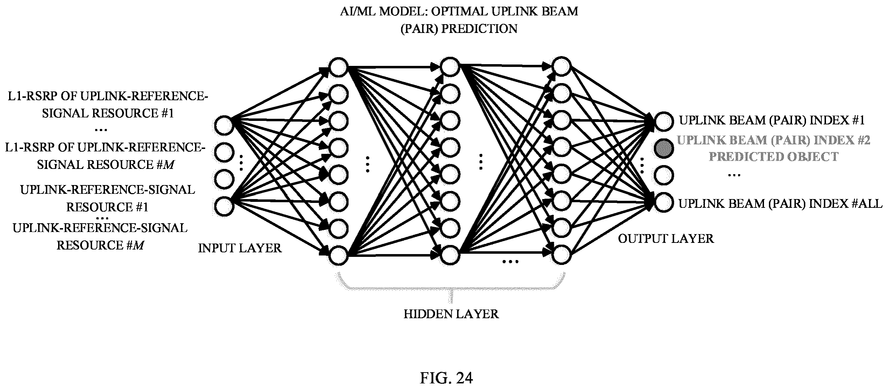

Specifically, in the second model input manner, the UE inputs the L1 -RSRP of measured uplink-reference-signal resources (SRS resources) in Set D and indexes of uplink-reference-signal resources (SRS resources) in Set D to the model, as illustrated in FIG. 24. This differs from FIG. 23 in that indexes of Muplink-reference-signal resources (SRS resources) and corresponding *M* link quality, such as L1-RSRP, are used as the input to the model (the third network model). An advantage is that the NW can perform measurement more flexibly and does not need to use the same input for each measurement. Similarly, the output of the model (the third network model) is indexes of optimal *K*₂ uplink beams (pairs) predicted, and in FIG. 24, *K*₂ = 1.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, information in the third measurement dataset is measured by the terminal device. In this embodiment, the terminal device can support downlink beam (pair) sweeping, and the third network model is different from the fourth network model. Since different reference signal sets are input to the UE-side model (the third network model) and the NW-side model (the fourth network model), parameters of respective nodes may be different, and the UE-side model and the NW-side model can be understood as 2 different uplink beam (pair) prediction models. However, a prediction result of the UE-side model is roughly aligned with a prediction result of the NW-side model, that is, an uplink receive beam predicted at the NW side corresponds to an uplink transmit beam predicted at the UE side, where there may be a higher SRS-RSRP. Optionally, the third network model and the fourth network model can be trained synchronously.

In some embodiments, a downlink-reference-signal resource in the second downlink-reference-signal measurement set (for example, set D') is determined based on the identity information of the *K*₂ uplink receive spatial filters predicted by the network device. Specifically, for example, assuming that the second downlink-reference-signal measurement set is Set D', during the downlink beam sweeping (for example, including downlink beam sweeping of Set D'), a beam selected for downlink sweeping can be adjusted optionally according to an optimal uplink receive beam predicted by the model. For example, a downlink transmit direction of high power L1-RSRP with a higher possibility is selected for sweeping.

In some embodiments, a downlink-reference-signal resource in the second downlink-reference-signal measurement set (for example, Set D') is configured by a network.

In some embodiments, when the third measurement dataset includes only the link quality information measured based on the second downlink-reference-signal measurement set, the link quality information measured based on the second downlink-reference-signal measurement set is input to the third network model in a fifth order. The fifth order is associated with an index of a downlink-reference-signal resource in the second downlink-reference-signal measurement set.

In some embodiments, when the fourth measurement dataset includes only the link quality information measured based on the second uplink-reference-signal measurement set, the link quality information measured based on the second uplink-reference-signal measurement set is input to the fourth network model in a sixth order. The sixth order is associated with an index of an uplink-reference-signal resource in the second uplink-reference-signal measurement set.

Specifically, for example, there are two main manners for the input to the third network model. One model input manner (first model input manner) is to input only link quality (such as L1-RSRP) of downlink-reference-signal resources (CSI-RS resources and/or SSB resources) in Set D' in a fixed order (i.e., the fifth order). The other model input manner (second model input manner) is to input link quality (such as L1-RSRP) and indexes of downlink-reference-signal resources (CSI-RS resources and/or SSB resources) in Set D'. An advantage of the second model input manner is that the selection from Set D' is more flexible.

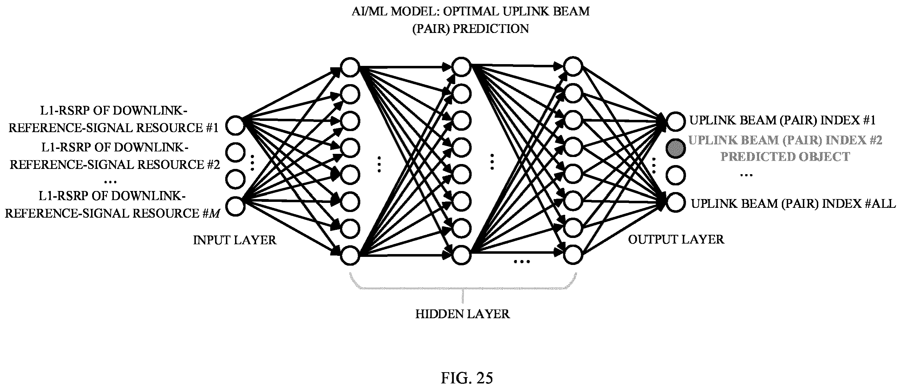

Specifically, in the first model input manner, the UE inputs the L1-RSRP (or other performance indicators, such as L1-SINR, L1-RSSI, or L1-RSRQ) of measured downlink-reference-signal resources (CSI-RS resources and/or SSB resources) in Set D' in a fixed order (i.e., the fifth order) to the model (the third network model), as illustrated in FIG. 25. The output is indexes of optimal *K*₂ uplink beams (pairs) predicted by the model (the third network model), and in FIG. 25, *K*₂ *=* 1.

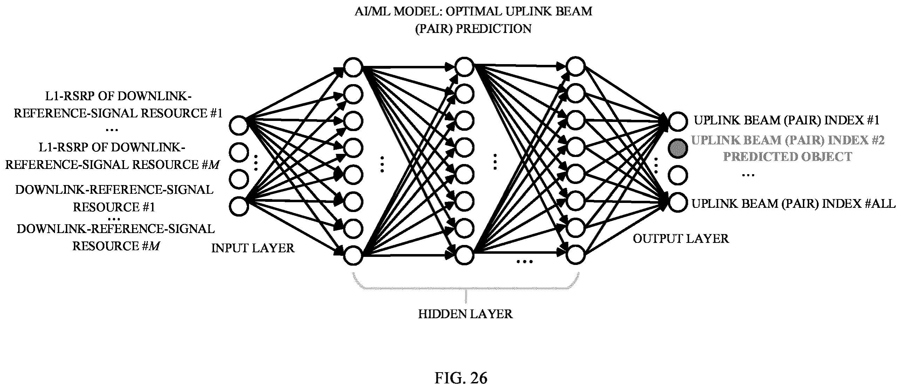

Specifically, in the second model input manner, the UE inputs the L1-RSRP of measured downlink-reference-signal resources (CSI-RS resources and/or SSB resources) in Set D' and indexes of downlink-reference-signal resources (CSI-RS resources and/or SSB resources) in Set D' to the model, as illustrated in FIG. 26. This differs from FIG. 25 in that indexes of *M* downlink-reference-signal resources (CSI-RS resources and/or SSB resources) and corresponding *M* link quality, such as L1-RSRP, are used as the input to the model (the third network model). An advantage is that the UE can perform measurement more flexibly and does not need to use the same input for each measurement. Similarly, the output of the model (the third network model) is indexes of optimal *K*₂ uplink beams (pairs) predicted, and in FIG. 26, *K*₂ = 1.

In some embodiments, predicted uplink spatial filter information does not need to be exchanged between the terminal device and the network device. The terminal device performs uplink transmission based on the identity information of the *K*₂ uplink transmit spatial filters after a second duration, and the network device performs uplink reception based on the identity information of the *K*₂ uplink receive spatial filters after the second duration.

Optionally, the second duration may be one or more time units. The time unit is one of: a slot, a symbol, a mini slot, a subframe, a frame, a second, a millisecond, and a microsecond.

Specifically, for example, the NW can use spatial relation information or an uplink TCI state or a joint TCI state for uplink beam indication. The core content of this indication is a spatial relation between reference signals, which includes a spatial relation between an uplink reference signal (for example, an SRS) or a downlink reference signal (for example, a CSI-RS or SSB reported by the UE) on a particular BWP in a particular CC and a physical uplink shared channel (PUSCH) DMRS, a spatial relation between the uplink reference signal or the downlink reference signal and a physical uplink control channel (PUCCH) DMRS, and a spatial relation between the uplink reference signal or the downlink reference signal and another SRS. In this embodiment, if the UE predicts an optimal uplink transmit beam, the NW side predicts an optimal uplink receive beam, and the transmit beam corresponds to the receive beam, then the NW does not need to perform uplink beam indication for the UE, and each side can directly use corresponding uplink transmit and receive beams during channel and signal transmission. An advantage of doing so is to reduce overhead and latency for uplink beam indication in the NR system.

In some embodiments, the terminal device receives second indication information from the network device. The second indication information indicates identity information of an uplink transmit spatial filter and identity information of an uplink receive spatial filter to be used among the identity information of the *K*₂ uplink transmit spatial filters and the identity information of the *K*₂ uplink receive spatial filters.

In some embodiments, the first indication information may be carried in at least one of: RRC signaling, DCI, or MAC CE signaling.

Specifically, for example, for optimal *K*₂ uplink transmit beams and *K*₂ uplink receive beams (i.e., *K*₂ uplink beam pairs) predicted by the models, the NW does not necessarily use the best one among the *K*₂ uplink beam pairs due to restrictions of other factors, such as scheduling restrictions, the NW still needs to simply indicate the uplink beam to the UE, which can be done by replacing spatial relation information IDs or uplink TCI state IDs or joint TCI state IDs with indexes of the *K*₂ uplink beam pairs. Since the range of beam pair indication is narrowed down to one of the optimal *K*₂ uplink beam pairs, overhead for uplink beam indication is accordingly reduced compared with a traditional indication manner. It may be noted that, the above beam pairs include beam pairs predicted respectively by the NW and UE with the same model, and also include beam pairs predicted respectively by the NW and UE with different models (where the UE predicts uplink transmit beams, and the NW predicts uplink receive beams).

In some embodiments, the terminal device receives third prediction information from the network device. The third prediction information includes identity information of an uplink spatial filter predicted by the fourth network model. The terminal device monitors prediction performance of the third network model and/or prediction performance of the fourth network model according to identity information of the uplink spatial filter predicted by the third network model and the identity information of the uplink spatial filter predicted by the fourth network model.

Specifically, the terminal device can periodically monitor the prediction performance of the third network model and/or the prediction performance of the fourth network model.

In some embodiments, when the performance of the third network model and/or the performance of the fourth network model is poor (for example, the prediction accuracy in a period of time is lower than a threshold), the third network model and/or the fourth network model is updated, or a network model(s) is re-selected.

In some embodiments, the third prediction information may be carried in at least one of: RRC signaling, DCI, or MAC CE signaling.

In some embodiments, the terminal device transmits fourth prediction information to the network device. The fourth prediction information includes identity information of an uplink spatial filter predicted by the third network model, and the identity information of the uplink spatial filter predicted by the third network model is used for the network device to monitor prediction performance of the third network model and/or prediction performance of the fourth network model. That is, the network device monitors the prediction performance of the third network model and/or the prediction performance of the fourth network model according to the identity information of the uplink spatial filter predicted by the third network model and identity information of the uplink spatial filter predicted by the fourth network model.

In some embodiments, the fourth prediction information may be carried in at least one of: RRC signaling, UCI, or MAC CE signaling.

Specifically, for uplink beam pair prediction of dual AI/ML models, the NW-side model predicts optimal *K*₂ uplink beam pairs in a prediction set Set C, and the UE side can also predict optimal *K*₂ uplink beam pairs in the prediction set Set C by using the other different model (with a downlink measurement set Set D' as the input). If the uplink beam pairs predicted by the two models are consistent (for example, IDs of the *K*₂ beam pairs are completely or partially the same), then it can be considered that the two different models both make accurate inferences, and otherwise it is considered that at least one of the two models at both sides makes inaccurate inferences. Based on the above criteria, there are two feasible methods for monitoring the accuracy of beam pair prediction. The first is that the NW side can inform the UE side of a beam pair inference result of the NW side, i.e., IDs of the optimal *K*₂ uplink beam pairs, and then the UE compares the inference result of the NW side with an inference result of the UE. The second is that the UE side reports to the NW a beam pair inference result of the UE side, i.e., IDs of the optimal *K*₂ uplink beam pairs, and then the NW compares the inference result of the UE side with an inference result of the NW. Therefore, the accuracy of the model inference is statistically calculated.

In some embodiments, the first capability information further includes at least one of: the maximum number of uplink-reference-signal measurement sets supported on all preconfigured CCs or all preconfigured BWPs, the maximum number of configured uplink-reference-signal measurement sets supported, the maximum number of uplink-reference-signal measurement sets supporting simultaneous transmission, the maximum number of uplink-reference-signal prediction sets supported on all the preconfigured CCs or all the preconfigured BWPs, the maximum number of downlink-reference-signal measurement sets supported on all the preconfigured CCs or all the preconfigured BWPs, the maximum number of configured downlink-reference-signal measurement sets supported, the maximum number of downlink-reference-signal measurement sets supporting simultaneous reception, the maximum number of uplink-reference-signal measurement sets supported on one CC or one BWP, the maximum number of uplink-reference-signal resources in each of the uplink-reference-signal measurement sets supported, the maximum number of uplink-reference-signal prediction sets supported on one CC or one BWP, the maximum number of downlink-reference-signal measurement sets supported on one CC or one BWP, the maximum number of downlink-reference-signal resources in each of the downlink-reference-signal measurement sets supported, or the maximum value of *K*₂.

Specifically, before the NW configures for the UE a measurement resource required for a model, the UE needs to inform through capability reporting the NW whether the UE supports uplink beam (pair) prediction and downlink beam (pair) sweeping based on dual models. If the UE supports this feature, a capability reported by the UE includes, but is not limited to, at least one of: the maximum number of measurement sets (Set D) that can be transmitted to the NW on all uplink CCs/BWPs, including the maximum number of configured measurement sets and the maximum number of measurement sets that can be simultaneously transmitted by the UE; the maximum number of beam (pair) prediction sets (Set C) supported on all the uplink CCs/BWPs; the maximum number of beam (pair) measurement sets (Set D') supported on all downlink CCs/BWPs, including the maximum number of configured measurement sets and the maximum number of measurement sets that can be simultaneously received by the UE; the maximum number of measurement sets that can be transmitted on one uplink CC/BWP, i.e., *N*ₘₐₓ; the maximum number of uplink SRS resources that can be transmitted in each measurement set Set D*ₙ* (1 <= *n* <= *N*); the maximum number of beam (pair) prediction sets supported on one uplink CC/BWP, i.e., *P*ₘₐₓ; the maximum number of beams (pairs) that can be predicted in each prediction set Set C*ₚ* (1 *<= p <= P*); the maximum number of beam (pair) measurement sets supported on one downlink CC/BWP, i.e., *M*ₘₐₓ; or the maximum number of downlink CSI-RS resources and/or SSB resources that can be received in each measurement set Set D'*ₘ* (1 *<= m* <= *M*).

In some embodiments, before the terminal device performs uplink spatial filter prediction based on the third network model, the terminal device receives second information from the network device. The second information is used for configuring at least one of: the second uplink-reference-signal measurement set or the first uplink-reference-signal prediction set. Alternatively, the second information is used for activating at least one of: the second uplink-reference-signal measurement set among multiple preconfigured uplink-reference-signal measurement sets or the first uplink-reference-signal prediction set among multiple preconfigured uplink-reference-signal prediction sets.

In some embodiments, the second information may be carried in at least one of: RRC signaling, DCI, or MAC CE signaling.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, the second information is further used for configuring the second downlink-reference-signal measurement set, or the second information is further used for activating the second downlink-reference-signal measurement set among multiple preconfigured downlink-reference-signal measurement sets.

Optionally, the NW configures and/or activates for the UE a measurement set Set D required for the model input. For example, the NW configures for the UE one or more Set D*ₙ* (1 *<= n <= N*) through RRC signaling. Set D*ₙ*, as an uplink beam (pair) measurement set, may include SRS resources. For another example, if the NW configures multiple Set D*ₙ* (1 *<= n* <= *N*) for the UE, then the NW needs to further activate one of the multiple configured Set D through MAC CE signaling according to the actual deployment and antenna configuration. Otherwise, the UE uses only one configured Set D.

Optionally, the NW configures and/or activates for the UE an uplink beam (pair) prediction set Set C output by the model. For example, the NW configures for the UE one or more uplink beam (pair) prediction sets Set C*ₚ* (1 *<= p <= P*) through RRC signaling. Set C*ₚ,* as a beam (pair) prediction set, may include CSI-RS resources and/or SSB resources. For another example, if the NW configures multiple Set *Cₚ* (1 *<= p <= P*), then the NW needs to further activate one of the multiple configured Set C through MAC CE signaling according to the actual deployment and antenna configuration. Otherwise, only one configured Set C is used.

Optionally, the NW configures and/or activates for the UE a measurement set Set D' required for the model input. For example, the NW configures for the UE one or more Set D'*ₘ* (1 <= *m* <= *M*) through RRC signaling. Set D'ₘ, as a downlink beam (pair) measurement set, may include CSI-RS resources and/or SSB resources. For another example, if the NW configures multiple D'*ₘ* (1 <= *m* <= *M*) for the UE, then the NW needs to further activate one of the multiple configured Set D' through MAC CE signaling according to the actual deployment and antenna configuration. Otherwise, the UE uses only one configured Set D'.

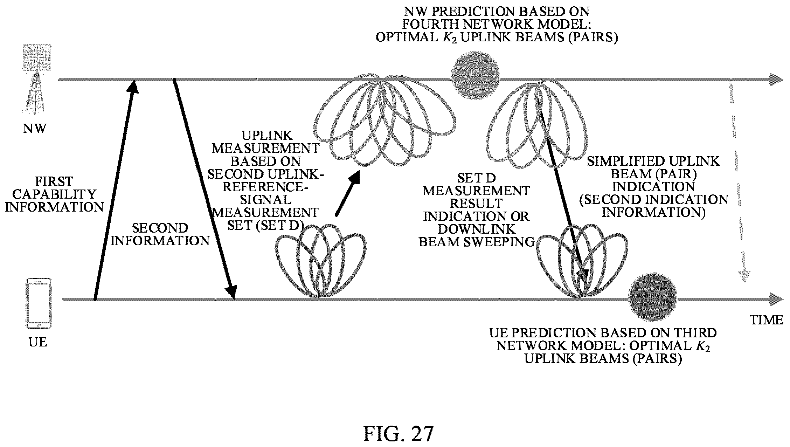

In some embodiments, in the case where the terminal device supports uplink spatial filter prediction based on the transmitting and receiving sides deployed network models, the overall process of uplink beam (pair) prediction of the dual AI/ML models may be illustrated in FIG. 27.

Therefore, in embodiments of the disclosure, the terminal device can support downlink spatial filter prediction based on the transmitting and receiving sides deployed network models, where the terminal device can perform downlink spatial filter prediction based on the first network model, and the network device can perform downlink spatial filter prediction based on the second network model; and/or the terminal device can support uplink spatial filter prediction based on the transmitting and receiving sides deployed network models, where the terminal device can perform uplink spatial filter prediction based on the third network model, and the network device can perform uplink spatial filter prediction based on thea fourth network model. As such, overhead and latency for uplink spatial filter management and/or downlink spatial filter management can be reduced.

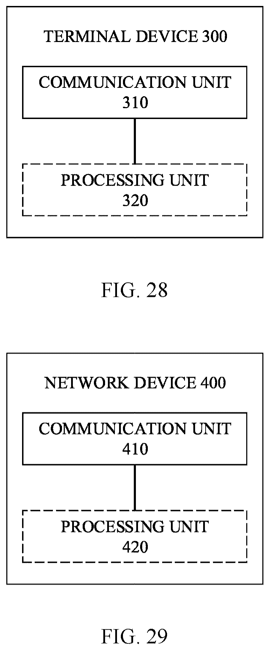

The method embodiments of the disclosure are described in detail above with reference to FIG. 14 to FIG. 27, and apparatus embodiments of the disclosure will be described in detail below with reference to FIG. 28 to FIG. 32. It may be understood that the apparatus embodiments and the method embodiments correspond to each other, and for similar illustrations, reference can be made to the method embodiments.

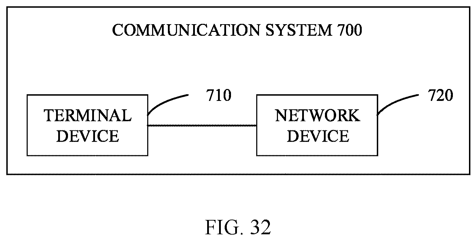

FIG. 28 is a schematic block diagram of a terminal device 300 according to embodiments of the disclosure. As illustrated in FIG. 32, the terminal device 300 includes a communication unit 310. The communication unit 310 is configured to transmit first capability information. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

In some embodiments, in the case where the terminal device supports downlink spatial filter prediction based on the transmitting and receiving sides deployed network models, a first network model is deployed at a terminal device side, and a second network model is deployed at a network device side. The first network model is configured to output a first prediction dataset based on an input of a first measurement dataset, and the second network model is configured to output a second prediction dataset based on an input of a second measurement dataset. The first measurement dataset includes at least one of: link quality information measured based on a first downlink-reference-signal measurement set, or an index of a downlink-reference-signal resource corresponding to the link quality information measured based on the first downlink-reference-signal measurement set. The first prediction dataset includes one of: identity information of *K*₁ predicted downlink receive spatial filters in a first downlink-reference-signal prediction set, or identity information of *K*₁ predicted downlink transmit spatial filters *K*₁ predicted downlink receive spatial filters in the first downlink-reference-signal prediction set. The second measurement dataset includes at least one of: the link quality information measured based on the first downlink-reference-signal measurement set, or the index of the downlink-reference-signal resource corresponding to the link quality information measured based on the first downlink-reference-signal measurement set. Alternatively, the second measurement dataset includes at least one of: link quality information measured based on a first uplink-reference-signal measurement set, or an index of an uplink-reference-signal resource corresponding to the link quality information measured based on the first uplink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set. *K*₁ is a positive integer.

In some embodiments, when the first measurement dataset includes only the link quality information measured based on the first downlink-reference-signal measurement set, the link quality information measured based on the first downlink-reference-signal measurement set is input to the first network model in a first order. The first order is associated with an index of a downlink-reference-signal resource in the first downlink-reference-signal measurement set.

In some embodiments, when the second measurement dataset includes at least one of: the link quality information measured based on the first downlink-reference-signal measurement set, or the index of the downlink-reference-signal resource corresponding to the link quality information measured based on the first downlink-reference-signal measurement set, information in the second measurement dataset is measured by the terminal device and reported to a network device.

In some embodiments, part or all of the information in the second measurement dataset is measured by the terminal device and reported to the network device at one time, or part or all of the information in the second measurement dataset is measured by the terminal device and reported to the network device multiple times.

In some embodiments, in the case where the terminal device reports only the link quality information measured based on the first downlink-reference-signal measurement set, the index of the downlink-reference-signal resource corresponding to the link quality information measured based on the first downlink-reference-signal measurement set is determined based on a reporting order. The reporting order is associated with an index of a downlink-reference-signal resource in the first downlink-reference-signal measurement set.

In some embodiments, when the second measurement dataset includes only the link quality information measured based on the first downlink-reference-signal measurement set, the link quality information measured based on the first downlink-reference-signal measurement set is input to the second network model in a second order. The second order is associated with an index of a downlink-reference-signal resource in the first downlink-reference-signal measurement set.

In some embodiments, the second network model is the same as the first network model.

In some embodiments, a downlink-reference-signal resource in the first downlink-reference-signal measurement set is part or all of downlink-reference-signal resources in a first downlink-reference-signal resource set.

In some embodiments, the first downlink-reference-signal resource set is configured by a network device, or the first downlink-reference-signal resource set is specified in a protocol.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, information in the second measurement dataset is measured by a network device.

In some embodiments, an uplink-reference-signal resource in the first uplink-reference-signal measurement set is determined based on the identity information of the *K*₁ predicted downlink receive spatial filters of the terminal device. Alternatively, an uplink-reference-signal resource in the first uplink-reference-signal measurement set is configured by a network.

In some embodiments, when the second measurement dataset includes only the link quality information measured based on the first uplink-reference-signal measurement set, the link quality information measured based on the first uplink-reference-signal measurement set is input to the second network model in a third order. The third order is associated with an index of an uplink-reference-signal resource in the first uplink-reference-signal measurement set.

In some embodiments, an uplink-reference-signal resource in the first uplink-reference-signal measurement set is part or all of uplink-reference-signal resources in a first uplink-reference-signal resource set.

In some embodiments, the first uplink-reference-signal resource set is configured by a network device, or the first uplink-reference-signal resource set is specified in a protocol.

In some embodiments, a downlink-reference-signal resource in the first downlink-reference-signal prediction set is part or all of downlink-reference-signal resources in a second downlink-reference-signal resource set.

In some embodiments, the second downlink-reference-signal resource set is configured by a network device, or the second downlink-reference-signal resource set is specified in a protocol.

In some embodiments, predicted downlink spatial filter information does not need to be exchanged between the terminal device and a network device. The terminal device performs downlink reception based on the identity information of the *K*₁ downlink receive spatial filters after a first duration, and the network device performs downlink transmission based on the identity information of the *K*₁ downlink transmit spatial filters after the first duration.

In some embodiments, the communication unit 310 is further configured to receive first indication information from a network device. The first indication information indicates identity information of a downlink transmit spatial filter and identity information of a downlink receive spatial filter to be used among the identity information of the *K*₁ downlink transmit spatial filters and the identity information of the *K*₁ downlink receive spatial filters.

In some embodiments, the terminal device 300 further includes a processing unit 320. The communication unit 310 is further configured to receive first prediction information from a network device, where the first prediction information includes identity information of a downlink spatial filter predicted by the second network model. The processing unit 320 is configured to monitor prediction performance of the first network model and/or prediction performance of the second network model according to identity information of the downlink spatial filter predicted by the first network model and the identity information of the downlink spatial filter predicted by the second network model.

In some embodiments, the terminal device transmits second prediction information to a network device. The second prediction information includes identity information of a downlink spatial filter predicted by the first network model, and the identity information of the downlink spatial filter predicted by the first network model is used for the network device to monitor prediction performance of the first network model and/or prediction performance of the second network model.

In some embodiments, the first capability information further includes at least one of: the maximum number of downlink-reference-signal measurement sets supported on all preconfigured CCs or all preconfigured BWPs, the maximum number of configured downlink-reference-signal measurement sets supported, the maximum number of downlink-reference-signal measurement sets supporting simultaneous measurement, the maximum number of downlink-reference-signal prediction sets supported on all the preconfigured CCs or all the preconfigured BWPs, the maximum number of uplink-reference-signal measurement sets supported on all the preconfigured CCs or all the preconfigured BWPs, the maximum number of configured uplink-reference-signal measurement sets supported, the maximum number of uplink-reference-signal measurement sets supporting simultaneous transmission, the maximum number of downlink-reference-signal measurement sets supported on one CC or one BWP, the maximum number of downlink-reference-signal resources in each of the downlink-reference-signal measurement sets supported, the maximum number of downlink-reference-signal prediction sets supported on one CC or one BWP, the maximum number of uplink-reference-signal measurement sets supported on one CC or one BWP, the maximum number of uplink-reference-signal resources in each of the uplink-reference-signal measurement sets supported, or the maximum value of*K*₁*.*

In some embodiments, before the terminal device performs downlink spatial filter prediction based on the first network model, the communication unit 310 is further configured to receive first information. The first information is used for configuring at least one of: the first downlink-reference-signal measurement set or the first downlink-reference-signal prediction set. Alternatively, the first information is used for activating at least one of: the first downlink-reference-signal measurement set among multiple preconfigured downlink-reference-signal measurement sets or the first downlink-reference-signal prediction set among multiple preconfigured downlink-reference-signal prediction sets.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, the first information is further used for configuring the first uplink-reference-signal measurement set, or the first information is further used for activating the first uplink-reference-signal measurement set among multiple preconfigured uplink-reference-signal measurement sets.

In some embodiments, in the case where the terminal device supports uplink spatial filter prediction based on the transmitting and receiving sides deployed network models, a third network model is deployed at a terminal device side, and a fourth network model is deployed at a network device side. The third network model is configured to output a third prediction dataset based on an input of a third measurement dataset, and the fourth network model is configured to output a fourth prediction dataset based on an input of a fourth measurement dataset. The third measurement dataset includes at least one of: link quality information measured based on a second uplink-reference-signal measurement set, or an index of an uplink-reference-signal resource corresponding to the link quality information measured based on the second uplink-reference-signal measurement set. Alternatively, the third measurement dataset includes at least one of: link quality information measured based on a second downlink-reference-signal measurement set, or an index of a downlink-reference-signal resource corresponding to the link quality information measured based on the second downlink-reference-signal measurement set. The third prediction dataset includes one of: identity information of *K*₂ predicted uplink transmit spatial filters in a first uplink-reference-signal prediction set, or identity information of *K*₂ predicted uplink transmit spatial filters and *K*₂ predicted uplink receive spatial filters in the first uplink-reference-signal prediction set. The fourth measurement dataset includes at least one of: the link quality information measured based on the second uplink-reference-signal measurement set, or the index of the uplink-reference-signal resource corresponding to the link quality information measured based on the second uplink-reference-signal measurement set. The fourth prediction dataset includes one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set. *K*₂ is a positive integer.

In some embodiments, when the third measurement dataset includes at least one of: the link quality information measured based on the second uplink-reference-signal measurement set, or the index of the uplink-reference-signal resource corresponding to the link quality information measured based on the second uplink-reference-signal measurement set, information in the third measurement dataset is measured by a network device and indicated to the terminal device.

In some embodiments, part or all of the information in the third measurement dataset is measured by the network device and indicated to the terminal device at one time, or part or all of the information in the third measurement dataset is measured by the network device and indicated to the terminal device multiple times.

In some embodiments, in the case where the network device indicates only the link quality information measured based on the second uplink-reference-signal measurement set, the index of the uplink-reference-signal resource corresponding to the link quality information measured based on the second uplink-reference-signal measurement set is determined based on an indication order. The indication order is associated with an index of an uplink-reference-signal resource in the second uplink-reference-signal measurement set.

In some embodiments, when the third measurement dataset includes only the link quality information measured based on the second uplink-reference-signal measurement set, the link quality information measured based on the second uplink-reference-signal measurement set is input to the third network model in a fourth order. The fourth order is associated with an index of an uplink-reference-signal resource in the second uplink-reference-signal measurement set.

In some embodiments, the third network model is the same as the fourth network model.

In some embodiments, an uplink-reference-signal resource in the second uplink-reference-signal measurement set is part or all of uplink-reference-signal resources in a second uplink-reference-signal resource set.

In some embodiments, the second uplink-reference-signal resource set is configured by a network device, or the second uplink-reference-signal resource set is specified in a protocol.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, information in the third measurement dataset is measured by the terminal device.

In some embodiments, a downlink-reference-signal resource in the second downlink-reference-signal measurement set is determined based on the identity information of the *K*₂ predicted uplink receive spatial filters of a network device. Alternatively, a downlink-reference-signal resource in the second downlink-reference-signal measurement set is configured by a network.

In some embodiments, when the third measurement dataset includes only the link quality information measured based on the second downlink-reference-signal measurement set, the link quality information measured based on the second downlink-reference-signal measurement set is input to the third network model in a fifth order. The fifth order is associated with an index of a downlink-reference-signal resource in the second downlink-reference-signal measurement set.

In some embodiments, a downlink-reference-signal resource in the second downlink-reference-signal measurement set is part or all of downlink-reference-signal resources in a third downlink-reference-signal resource set.

In some embodiments, the third downlink-reference-signal resource set is configured by a network device, or the third downlink-reference-signal resource set is specified in a protocol.

In some embodiments, when the fourth measurement dataset includes only the link quality information measured based on the second uplink-reference-signal measurement set, the link quality information measured based on the second uplink-reference-signal measurement set is input to the fourth network model in a sixth order. The sixth order is associated with an index of an uplink-reference-signal resource in the second uplink-reference-signal measurement set.

In some embodiments, an uplink-reference-signal resource in the first uplink-reference-signal prediction set is part or all of uplink-reference-signal resources in a third uplink-reference-signal resource set.

In some embodiments, the third uplink-reference-signal resource set is configured by a network device, or the third uplink-reference-signal resource set is specified in a protocol.

In some embodiments, predicted uplink spatial filter information does not need to be exchanged between the terminal device and a network device. The terminal device performs uplink transmission based on the identity information of the *K*₂ uplink transmit spatial filters after a second duration, and the network device performs uplink reception based on the identity information of the *K*₂ uplink receive spatial filters after the second duration.

In some embodiments, the communication unit 310 is further configured to receive second indication information from a network device. The second indication information indicates identity information of an uplink transmit spatial filter and identity information of an uplink receive spatial filter to be used among the identity information of the *K*₂ uplink transmit spatial filters and the identity information of the *K*₂ uplink receive spatial filters.

In some embodiments, the terminal device 300 further includes a processing unit 320. The communication unit 310 is further configured to receive third prediction information from a network device, where the third prediction information includes identity information of an uplink spatial filter predicted by the fourth network model. The processing unit 320 is configured to monitor prediction performance of the third network model and/or prediction performance of the fourth network model according to identity information of the uplink spatial filter predicted by the third network model and the identity information of the uplink spatial filter predicted by the fourth network model.

In some embodiments, the communication unit 310 is further configured to transmit fourth prediction information to a network device. The fourth prediction information includes identity information of an uplink spatial filter predicted by the third network model, and the identity information of the uplink spatial filter predicted by the third network model is used for the network device to monitor prediction performance of the third network model and/or prediction performance of the fourth network model.

In some embodiments, the first capability information further includes at least one of: the maximum number of uplink-reference-signal measurement sets supported on all preconfigured CCs or all preconfigured BWPs, the maximum number of configured uplink-reference-signal measurement sets supported, the maximum number of uplink-reference-signal measurement sets supporting simultaneous transmission, the maximum number of uplink-reference-signal prediction sets supported on all the preconfigured CCs or all the preconfigured BWPs, the maximum number of downlink-reference-signal measurement sets supported on all the preconfigured CCs or all the preconfigured BWPs, the maximum number of configured downlink-reference-signal measurement sets supported, the maximum number of downlink-reference-signal measurement sets supporting simultaneous reception, the maximum number of uplink-reference-signal measurement sets supported on one CC or one BWP, the maximum number of uplink-reference-signal resources in each of the uplink-reference-signal measurement sets supported, the maximum number of uplink-reference-signal prediction sets supported on one CC or one BWP, the maximum number of downlink-reference-signal measurement sets supported on one CC or one BWP, the maximum number of downlink-reference-signal resources in each of the downlink-reference-signal measurement sets supported, or the maximum value of *K*₂.

In some embodiments, before the terminal device performs uplink spatial filter prediction based on the third network model, the communication unit 310 is further configured to receive second information. The second information is used for configuring at least one of: the second uplink-reference-signal measurement set or the first uplink-reference-signal prediction set. Alternatively, the second information is used for activating at least one of: the second uplink-reference-signal measurement set among multiple preconfigured uplink-reference-signal measurement sets or the first uplink-reference-signal prediction set among multiple preconfigured uplink-reference-signal prediction sets.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, the second information is further used for configuring the second downlink-reference-signal measurement set, or the second information is further used for activating the second downlink-reference-signal measurement set among multiple preconfigured downlink-reference-signal measurement sets.

In some embodiments, the communication unit above may be a communication interface or a transceiver, or may be an input/output interface of a communication chip or an SOC. The processing unit above may be one or more processors.

It may be understood that, the terminal device 300 according to embodiments of the disclosure may correspond to the terminal device in the method embodiments of the disclosure, and the foregoing and other operations and/or functions of various units in the terminal device 300 are respectively intended for implementing corresponding procedures of the terminal device in the method 200 illustrated in FIG. 14, which will not be repeated herein for the sake of simplicity.

FIG. 29 is a schematic block diagram of a network device 400 according to embodiments of the disclosure. As illustrated in FIG. 29, the network device 400 includes a communication unit 410. The communication unit 410 is configured to receive first capability information from a terminal device. The first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

In some embodiments, in the case where the terminal device supports downlink spatial filter prediction based on the transmitting and receiving sides deployed network models, a first network model is deployed at a terminal device side, and a second network model is deployed at a network device side. The first network model is configured to output a first prediction dataset based on an input of a first measurement dataset, and the second network model is configured to output a second prediction dataset based on an input of a second measurement dataset. The first measurement dataset includes at least one of: link quality information measured based on a first downlink-reference-signal measurement set, or an index of a downlink-reference-signal resource corresponding to the link quality information measured based on the first downlink-reference-signal measurement set. The first prediction dataset includes one of: identity information of *K*₁ predicted downlink receive spatial filters in a first downlink-reference-signal prediction set, or identity information of *K*₁ predicted downlink transmit spatial filters and *K*₁ predicted downlink receive spatial filters in the first downlink-reference-signal prediction set. The second measurement dataset includes at least one of: the link quality information measured based on the first downlink-reference-signal measurement set, or the index of the downlink-reference-signal resource corresponding to the link quality information measured based on the first downlink-reference-signal measurement set. Alternatively, the second measurement dataset includes at least one of: link quality information measured based on a first uplink-reference-signal measurement set, or an index of an uplink-reference-signal resource corresponding to the link quality information measured based on the first uplink-reference-signal measurement set. The second prediction dataset includes one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set. *K*₁ is a positive integer.

In some embodiments, when the first measurement dataset includes only the link quality information measured based on the first downlink-reference-signal measurement set, the link quality information measured based on the first downlink-reference-signal measurement set is input to the first network model in a first order. The first order is associated with an index of a downlink-reference-signal resource in the first downlink-reference-signal measurement set.

In some embodiments, when the second measurement dataset includes at least one of: the link quality information measured based on the first downlink-reference-signal measurement set, or the index of the downlink-reference-signal resource corresponding to the link quality information measured based on the first downlink-reference-signal measurement set, information in the second measurement dataset is measured by the terminal device and reported to the network device.

In some embodiments, part or all of the information in the second measurement dataset is measured by the terminal device and reported to the network device at one time, or part or all of the information in the second measurement dataset is measured by the terminal device and reported to the network device multiple times.

In some embodiments, in the case where the terminal device reports only the link quality information measured based on the first downlink-reference-signal measurement set, the index of the downlink-reference-signal resource corresponding to the link quality information measured based on the first downlink-reference-signal measurement set is determined based on a reporting order. The reporting order is associated with an index of a downlink-reference-signal resource in the first downlink-reference-signal measurement set.

In some embodiments, when the second measurement dataset includes only the link quality information measured based on the first downlink-reference-signal measurement set, the link quality information measured based on the first downlink-reference-signal measurement set is input to the second network model in a second order. The second order is associated with an index of a downlink-reference-signal resource in the first downlink-reference-signal measurement set.

In some embodiments, the second network model is the same as the first network model.

In some embodiments, a downlink-reference-signal resource in the first downlink-reference-signal measurement set is part or all of downlink-reference-signal resources in a first downlink-reference-signal resource set.

In some embodiments, the first downlink-reference-signal resource set is configured by the network device, or the first downlink-reference-signal resource set is specified in a protocol.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, information in the second measurement dataset is measured by the network device.

In some embodiments, an uplink-reference-signal resource in the first uplink-reference-signal measurement set is determined based on the identity information of the *K*₁ predicted downlink receive spatial filters of the terminal device. Alternatively, an uplink-reference-signal resource in the first uplink-reference-signal measurement set is configured by a network.

In some embodiments, when the second measurement dataset includes only the link quality information measured based on the first uplink-reference-signal measurement set, the link quality information measured based on the first uplink-reference-signal measurement set is input to the second network model in a third order. The third order is associated with an index of an uplink-reference-signal resource in the first uplink-reference-signal measurement set.

In some embodiments, an uplink-reference-signal resource in the first uplink-reference-signal measurement set is part or all of uplink-reference-signal resources in a first uplink-reference-signal resource set.

In some embodiments, the first uplink-reference-signal resource set is configured by the network device, or the first uplink-reference-signal resource set is specified in a protocol.

In some embodiments, a downlink-reference-signal resource in the first downlink-reference-signal prediction set is part or all of downlink-reference-signal resources in a second downlink-reference-signal resource set.

In some embodiments, the second downlink-reference-signal resource set is configured by the network device, or the second downlink-reference-signal resource set is specified in a protocol.

In some embodiments, predicted downlink spatial filter information does not need to be exchanged between the terminal device and the network device. The terminal device performs downlink reception based on the identity information of the *K*₁ downlink receive spatial filters after a first duration, and the network device performs downlink transmission based on the identity information of the *K*₁ downlink transmit spatial filters after the first duration.

In some embodiments, the communication unit 410 is further configured to transmit first indication information to the terminal device. The first indication information indicates identity information of a downlink transmit spatial filter and identity information of a downlink receive spatial filter to be used among the identity information of the *K*₁ downlink transmit spatial filters and the identity information of the *K*₁ downlink receive spatial filters.

In some embodiments, the communication unit 410 is further configured to transmit first prediction information to the terminal device. The first prediction information includes identity information of a downlink spatial filter predicted by the second network model, and the identity information of the downlink spatial filter predicted by the second network model is used for the network device to monitor prediction performance of the first network model and/or prediction performance of the second network model.

In some embodiments, the network device 400 further includes a processing unit 420. The communication unit 410 is further configured to receive second prediction information from the terminal device, where the second prediction information includes identity information of a downlink spatial filter predicted by the first network model. The processing unit 420 is configured to monitor prediction performance of the first network model and/or prediction performance of the second network model according to the identity information of the downlink spatial filter predicted by the first network model and identity information of the downlink spatial filter predicted by the second network model.

In some embodiments, the first capability information further includes at least one of: the maximum number of downlink-reference-signal measurement sets supported on all preconfigured CCs or all preconfigured BWPs, the maximum number of configured downlink-reference-signal measurement sets supported, the maximum number of downlink-reference-signal measurement sets supporting simultaneous measurement, the maximum number of downlink-reference-signal prediction sets supported on all the preconfigured CCs or all the preconfigured BWPs, the maximum number of uplink-reference-signal measurement sets supported on all the preconfigured CCs or all the preconfigured BWPs, the maximum number of configured uplink-reference-signal measurement sets supported, the maximum number of uplink-reference-signal measurement sets supporting simultaneous transmission, the maximum number of downlink-reference-signal measurement sets supported on one CC or one BWP, the maximum number of downlink-reference-signal resources in each of the downlink-reference-signal measurement sets supported, the maximum number of downlink-reference-signal prediction sets supported on one CC or one BWP, the maximum number of uplink-reference-signal measurement sets supported on one CC or one BWP, the maximum number of uplink-reference-signal resources in each of the uplink-reference-signal measurement sets supported, or the maximum value of *K*₁*.*

In some embodiments, before the network device performs downlink spatial filter prediction based on the second network model, the communication unit 410 is further configured to transmit first information to the terminal device. The first information is used for configuring at least one of: the first downlink-reference-signal measurement set or the first downlink-reference-signal prediction set. Alternatively, the first information is used for activating at least one of: the first downlink-reference-signal measurement set among multiple preconfigured downlink-reference-signal measurement sets or the first downlink-reference-signal prediction set among multiple preconfigured downlink-reference-signal prediction sets.

In some embodiments, when the second measurement dataset includes at least one of: the link quality information measured based on the first uplink-reference-signal measurement set, or the index of the uplink-reference-signal resource corresponding to the link quality information measured based on the first uplink-reference-signal measurement set, the first information is further used for configuring the first uplink-reference-signal measurement set, or the first information is further used for activating the first uplink-reference-signal measurement set among multiple preconfigured uplink-reference-signal measurement sets.

In some embodiments, in the case where the terminal device supports uplink spatial filter prediction based on the transmitting and receiving sides deployed network models, a third network model is deployed at a terminal device side, and a fourth network model is deployed at a network device side. The third network model is configured to output a third prediction dataset based on an input of a third measurement dataset, and the fourth network model is configured to output a fourth prediction dataset based on an input of a fourth measurement dataset. The third measurement dataset includes at least one of: link quality information measured based on a second uplink-reference-signal measurement set, or an index of an uplink-reference-signal resource corresponding to the link quality information measured based on the second uplink-reference-signal measurement set. Alternatively, the third measurement dataset includes at least one of: link quality information measured based on a second downlink-reference-signal measurement set, or an index of a downlink-reference-signal resource corresponding to the link quality information measured based on the second downlink-reference-signal measurement set. The third prediction dataset includes one of: identity information of *K*₂ predicted uplink transmit spatial filters in a first uplink-reference-signal prediction set, or identity information of *K*₂ predicted uplink transmit spatial filters and *K*₂ predicted uplink receive spatial filters in the first uplink-reference-signal prediction set. The fourth measurement dataset includes at least one of: the link quality information measured based on the second uplink-reference-signal measurement set, or the index of the uplink-reference-signal resource corresponding to the link quality information measured based on the second uplink-reference-signal measurement set. The fourth prediction dataset includes one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set. *K*₂ is a positive integer.

In some embodiments, when the third measurement dataset includes at least one of: the link quality information measured based on the second uplink-reference-signal measurement set, or the index of the uplink-reference-signal resource corresponding to the link quality information measured based on the second uplink-reference-signal measurement set, information in the third measurement dataset is measured by the network device and indicated to the terminal device.

In some embodiments, part or all of the information in the third measurement dataset is measured by the network device and indicated to the terminal device at one time, or part or all of the information in the third measurement dataset is measured by the network device and indicated to the terminal device multiple times.

In some embodiments, in the case where the network device indicates only the link quality information measured based on the second uplink-reference-signal measurement set, the index of the uplink-reference-signal resource corresponding to the link quality information measured based on the second uplink-reference-signal measurement set is determined based on an indication order. The indication order is associated with an index of an uplink-reference-signal resource in the second uplink-reference-signal measurement set.

In some embodiments, when the third measurement dataset includes only the link quality information measured based on the second uplink-reference-signal measurement set, the link quality information measured based on the second uplink-reference-signal measurement set is input to the third network model in a fourth order. The fourth order is associated with an index of an uplink-reference-signal resource in the second uplink-reference-signal measurement set.

In some embodiments, the third network model is the same as the fourth network model.

In some embodiments, an uplink-reference-signal resource in the second uplink-reference-signal measurement set is part or all of uplink-reference-signal resources in a second uplink-reference-signal resource set.

In some embodiments, the second uplink-reference-signal resource set is configured by the network device, or the second uplink-reference-signal resource set is specified in a protocol.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, information in the third measurement dataset is measured by the terminal device.

In some embodiments, a downlink-reference-signal resource in the second downlink-reference-signal measurement set is determined based on the identity information of the *K*₂ predicted uplink receive spatial filters of the network device. Alternatively, a downlink-reference-signal resource in the second downlink-reference-signal measurement set is configured by a network.

In some embodiments, when the third measurement dataset includes only the link quality information measured based on the second downlink-reference-signal measurement set, the link quality information measured based on the second downlink-reference-signal measurement set is input to the third network model in a fifth order. The fifth order is associated with an index of a downlink-reference-signal resource in the second downlink-reference-signal measurement set.

In some embodiments, a downlink-reference-signal resource in the second downlink-reference-signal measurement set is part or all of downlink-reference-signal resources in a third downlink-reference-signal resource set.

In some embodiments, the third downlink-reference-signal resource set is configured by the network device, or the third downlink-reference-signal resource set is specified in a protocol.

In some embodiments, when the fourth measurement dataset includes only the link quality information measured based on the second uplink-reference-signal measurement set, the link quality information measured based on the second uplink-reference-signal measurement set is input to the fourth network model in a sixth order. The sixth order is associated with an index of an uplink-reference-signal resource in the second uplink-reference-signal measurement set.

In some embodiments, an uplink-reference-signal resource in the first uplink-reference-signal prediction set is part or all of uplink-reference-signal resources in a third uplink-reference-signal resource set.

In some embodiments, the third uplink-reference-signal resource set is configured by the network device, or the third uplink-reference-signal resource set is specified in a protocol.

In some embodiments, predicted uplink spatial filter information does not need to be exchanged between the terminal device and the network device. The terminal device performs uplink transmission based on the identity information of the *K*₂ uplink transmit spatial filters after a second duration, and the network device performs uplink reception based on the identity information of the *K*₂ uplink receive spatial filters after the second duration.

In some embodiments, the communication unit 410 is further configured to transmit second indication information to the terminal device. The second indication information indicates identity information of an uplink transmit spatial filter and identity information of an uplink receive spatial filter to be used among the identity information of the *K*₂ uplink transmit spatial filters and the identity information of the *K*₂ uplink receive spatial filters.

In some embodiments, the communication unit 410 is further configured to transmit third prediction information to the terminal device. The third prediction information includes identity information of an uplink spatial filter predicted by the fourth network model, and the identity information of the uplink spatial filter predicted by the fourth network model is used for the network device to monitor prediction performance of the third network model and/or prediction performance of the fourth network model.

In some embodiments, the network device 400 includes a processing unit 420. The communication unit 410 is further configured to receive fourth prediction information from the terminal device, where the fourth prediction information includes identity information of an uplink spatial filter predicted by the third network model. The processing unit 420 is configured to monitor prediction performance of the third network model and/or prediction performance of the fourth network model according to the identity information of the uplink spatial filter predicted by the third network model and identity information of the uplink spatial filter predicted by the fourth network model.

In some embodiments, the first capability information further includes at least one of: the maximum number of uplink-reference-signal measurement sets supported on all preconfigured CCs or all preconfigured BWPs, the maximum number of configured uplink-reference-signal measurement sets supported, the maximum number of uplink-reference-signal measurement sets supporting simultaneous transmission, the maximum number of uplink-reference-signal prediction sets supported on all the preconfigured CCs or all the preconfigured BWPs, the maximum number of downlink-reference-signal measurement sets supported on all the preconfigured CCs or all the preconfigured BWPs, the maximum number of configured downlink-reference-signal measurement sets supported, the maximum number of downlink-reference-signal measurement sets supporting simultaneous reception, the maximum number of uplink-reference-signal measurement sets supported on one CC or one BWP, the maximum number of uplink-reference-signal resources in each of the uplink-reference-signal measurement sets supported, the maximum number of uplink-reference-signal prediction sets supported on one CC or one BWP, the maximum number of downlink-reference-signal measurement sets supported on one CC or one BWP, the maximum number of downlink-reference-signal resources in each of the downlink-reference-signal measurement sets supported, or the maximum value of *K₂.*

In some embodiments, before the network device performs uplink spatial filter prediction based on the fourth network model, the communication unit 410 is further configured to transmit second information to the terminal device. The second information is used for configuring at least one of: the second uplink-reference-signal measurement set or the first uplink-reference-signal prediction set. Alternatively, the second information is used for activating at least one of: the second uplink-reference-signal measurement set among multiple preconfigured uplink-reference-signal measurement sets or the first uplink-reference-signal prediction set among multiple preconfigured uplink-reference-signal prediction sets.

In some embodiments, when the third measurement dataset includes at least one of: the link quality information measured based on the second downlink-reference-signal measurement set, or the index of the downlink-reference-signal resource corresponding to the link quality information measured based on the second downlink-reference-signal measurement set, the second information is further used for configuring the second downlink-reference-signal measurement set, or the second information is further used for activating the second downlink-reference-signal measurement set among multiple preconfigured downlink-reference-signal measurement sets.

In some embodiments, the communication unit above may be a communication interface or a transceiver, or may be an input/output interface of a communication chip or an SOC. The processing unit above may be one or more processors.

It may be understood that, the network device 400 according to embodiments of the disclosure may correspond to the network device in the method embodiments of the disclosure, and the foregoing and other operations and/or functions of various units in the network device 400 are respectively intended for implementing corresponding procedures of the network device in the method 200 illustrated in FIG. 14, which will not be repeated herein for the sake of simplicity.

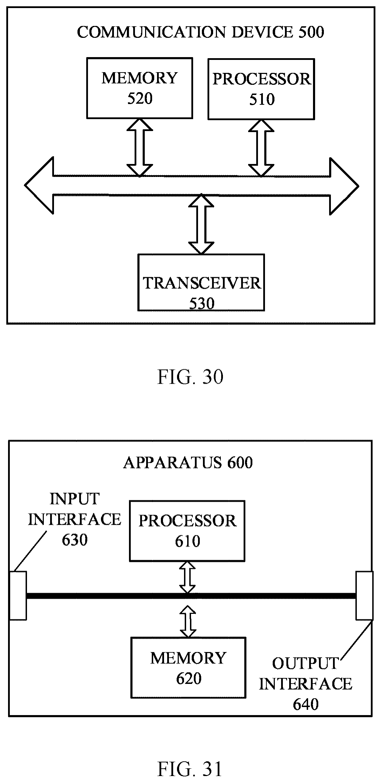

FIG. 30 is a schematic structural diagram of a communication device 500 provided in embodiments of the disclosure. The communication device 500 illustrated in FIG. 30 includes a processor 510. The processor 510 can invoke and execute a computer program stored in a memory, so as to implement the method in embodiments of the disclosure.

In some embodiments, as illustrated in FIG. 30, the communication device 500 may further include a memory 520. The processor 510 can invoke and execute a computer program stored in the memory 520, so as to implement the method in embodiments of the disclosure.

The memory 520 may be a separate device independent of the processor 510, or may be integrated into the processor 510.

In some embodiments, as illustrated in FIG. 30, the communication device 500 may further include a transceiver 530. The processor 510 can control the transceiver 530 to communicate with other devices, specifically, to transmit information or data to other devices or to receive information or data from other devices.

The transceiver 530 may include a transmitter and a receiver. The transceiver 530 may further include an antenna, where one or more antennas may be provided.

In some embodiments, the processor 510 can implement the function of a processing unit in a terminal device, or the processor 510 can implement the function of a processing unit in a network device, which will not be repeated herein for the sake of simplicity.

In some embodiments, the transceiver 530 can implement the function of a communication unit in the terminal device, which will not be repeated herein for the sake of simplicity.

In some embodiments, the transceiver 530 can implement the function of a communication unit in the network device, which will not be repeated herein for the sake of simplicity.

In some embodiments, the communication device 500 may specifically be the network device in embodiments of the disclosure, and the communication device 500 can implement corresponding operations implemented by the network device in various methods in embodiments of the disclosure, which will not be repeated herein for the sake of simplicity.

In some embodiments, the communication device 500 may specifically be the terminal device in embodiments of the disclosure, and the communication device 500 can implement corresponding operations implemented by the terminal device in various methods in embodiments of the disclosure, which will not be repeated herein for the sake of simplicity.

FIG. 31 is a schematic structural diagram of an apparatus according to embodiments of the disclosure. The apparatus 600 illustrated in FIG. 31 includes a processor 610. The processor 610 can invoke and execute a computer program stored in a memory, so as to implement the method in embodiments of the disclosure.

In some embodiments, as illustrated in FIG. 31, the apparatus 600 may further include a memory 620. The processor 610 can invoke and execute a computer program stored in the memory 620, so as to implement the method in embodiments of the disclosure.

The memory 620 may be a separate device independent of the processor 610, or may be integrated into the processor 610.

In some embodiments, the processor 610 can implement the function of a processing unit in a terminal device, or the processor 610 can implement the function of a processing unit in a network device, which will not be repeated herein for the sake of simplicity.

In some embodiments, the apparatus 600 may further include an input interface 630. The processor 610 can control the input interface 630 to communicate with other devices or chips, and specifically, to obtain information or data transmitted by other devices or chips. Optionally, the processor 610 may be located in chip or off chip.

In some embodiments, the input interface 630 can implement the function of a communication unit in the terminal device, or the input interface 630 can implement the function of a communication unit in the network device.

In some embodiments, the apparatus 600 may further include an output interface 640. The processor 610 can control the output interface 640 to communicate with other devices or chips, and specifically, to output information or data to other devices or chips. Optionally, the processor 610 may be located in chip or off chip.

In some embodiments, the output interface 640 can implement the function of the communication unit in the terminal device, or the output interface 640 can implement the function of the communication unit in the network device.

In some embodiments, the apparatus may be applied to the network device in embodiments of the disclosure, and the apparatus can implement corresponding operations implemented by the network device in various methods in embodiments of the disclosure, which will not be repeated herein for the sake of simplicity.

In some embodiments, the apparatus may be applied to the terminal device in embodiments of the disclosure, and the apparatus can implement corresponding operations implemented by the terminal device in various methods in embodiments of the disclosure, which will not be repeated herein for the sake of simplicity.

In some embodiments, the apparatus mentioned in embodiments of the disclosure may also be a chip, for example, an SoC.

FIG. 32 is a schematic block diagram of a communication system 700 provided in embodiments of the disclosure. As illustrated in FIG. 32, the communication system 700 includes a terminal device 710 and a network device 720.

The terminal device 710 may be configured to implement corresponding functions implemented by the terminal device in the foregoing methods, and the network device 720 may be configured to implement corresponding functions implemented by the network device in the foregoing methods, which will not be repeated herein for the sake of simplicity.

It may be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an ASIC, a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium mature in the skill such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method described above with the hardware of the processor.

It may be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or a flash memory. The volatile memory may be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the disclosure is intended to include, but is not limited to, these and any other suitable types of memory.

It may be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

A computer-readable storage medium is further provided in embodiments of the disclosure. The computer-readable storage medium is configured to store a computer program.

In some embodiments, the computer-readable storage medium may be applied to the network device in embodiments of the disclosure, and the computer program causes a computer to execute corresponding operations implemented by the network device in various methods in embodiments of the disclosure, which will not be repeated herein for the sake of simplicity.

In some embodiments, the computer-readable storage medium may be applied to the terminal device in embodiments of the disclosure, and the computer program causes a computer to execute corresponding operations implemented by the terminal device in various methods in embodiments of the disclosure, which will not be repeated herein for the sake of simplicity.

A computer program product is further provided in embodiments of the disclosure. The computer program product includes computer program instructions.

In some embodiments, the computer program product may be applied to the network device in embodiments of the disclosure, and the computer program instructions cause a computer to execute corresponding operations implemented by the network device in various methods in embodiments of the disclosure, which will not be repeated herein for the sake of simplicity.

In some embodiments, the computer program product may be applied to the terminal device in embodiments of the disclosure, and the computer program instructions cause a computer to execute corresponding operations implemented by the terminal device in various methods in embodiments of the disclosure, which will not be repeated herein for the sake of simplicity.

A computer program is further provided in embodiments of the disclosure.

In some embodiments, the computer program may be applied to the network device in embodiments of the disclosure. The computer program, when executed by a computer, causes the computer to implement corresponding operations implemented by the network device in various methods in embodiments of the disclosure, which will not be repeated herein for the sake of simplicity.

In some embodiments, the computer program may be applied to the terminal device in embodiments of the disclosure. The computer program, when executed by a computer, causes the computer to implement corresponding operations implemented by the terminal device in various methods in embodiments of the disclosure, which will not be repeated herein for the sake of simplicity.

It will be appreciated by those of ordinary skill in the art that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, an ROM, an RAM, a magnetic disk, or an optical disk.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
transmitting, by a terminal device, first capability information, wherein the first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

2. The method of claim 1, wherein
in a case where the terminal device supports downlink spatial filter prediction based on the transmitting and receiving sides deployed network models, a first network model is deployed at a terminal device side, and a second network model is deployed at a network device side, wherein
the first network model is configured to output a first prediction dataset based on an input of a first measurement dataset, and the second network model is configured to output a second prediction dataset based on an input of a second measurement dataset;
the first measurement dataset comprises at least one of: link quality information measured based on a first downlink-reference-signal measurement set, or an index of a downlink-reference-signal resource corresponding to the link quality information measured based on the first downlink-reference-signal measurement set; and the first prediction dataset comprises one of: identity information of *K*₁ predicted downlink receive spatial filters in a first downlink-reference-signal prediction set, or identity information of *K*₁ predicted downlink transmit spatial filters and *K*₁ predicted downlink receive spatial filters in the first downlink-reference-signal prediction set;
the second measurement dataset comprises at least one of: the link quality information measured based on the first downlink-reference-signal measurement set, or the index of the downlink-reference-signal resource corresponding to the link quality information measured based on the first downlink-reference-signal measurement set; or the second measurement dataset comprises at least one of: link quality information measured based on a first uplink-reference-signal measurement set, or an index of an uplink-reference-signal resource corresponding to the link quality information measured based on the first uplink-reference-signal measurement set; and the second prediction dataset comprises one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set; and
*K*₁ is a positive integer.

3. The method of claim 2, wherein
in a case where the first measurement dataset comprises only the link quality information measured based on the first downlink-reference-signal measurement set, the link quality information measured based on the first downlink-reference-signal measurement set is input to the first network model in a first order, wherein
the first order is associated with an index of a downlink-reference-signal resource in the first downlink-reference-signal measurement set.

4. The method of claim 2 or 3, wherein
in a case where the second measurement dataset comprises at least one of: the link quality information measured based on the first downlink-reference-signal measurement set, or the index of the downlink-reference-signal resource corresponding to the link quality information measured based on the first downlink-reference-signal measurement set, information in the second measurement dataset is measured by the terminal device and reported to a network device.

5. The method of claim 4, wherein part or all of the information in the second measurement dataset is measured by the terminal device and reported to the network device at one time, or part or all of the information in the second measurement dataset is measured by the terminal device and reported to the network device multiple times.

6. The method of claim 4 or 5, wherein
in a case where the terminal device reports only the link quality information measured based on the first downlink-reference-signal measurement set, the index of the downlink-reference-signal resource corresponding to the link quality information measured based on the first downlink-reference-signal measurement set is determined based on a reporting order, wherein the reporting order is associated with an index of a downlink-reference-signal resource in the first downlink-reference-signal measurement set.

7. The method of any one of claims 4 to 6, wherein
in a case where the second measurement dataset comprises only the link quality information measured based on the first downlink-reference-signal measurement set, the link quality information measured based on the first downlink-reference-signal measurement set is input to the second network model in a second order, wherein
the second order is associated with an index of a downlink-reference-signal resource in the first downlink-reference-signal measurement set.

8. The method of any one of claims 4 to 7, wherein
the second network model is the same as the first network model.

9. The method of any one of claims 2 to 8, wherein a downlink-reference-signal resource in the first downlink-reference-signal measurement set is part or all of downlink-reference-signal resources in a first downlink-reference-signal resource set.

10. The method of claim 9, wherein
the first downlink-reference-signal resource set is configured by a network device, or the first downlink-reference-signal resource set is specified in a protocol.

11. The method of claim 2 or 3, wherein
in a case where the second measurement dataset comprises at least one of: the link quality information measured based on the first uplink-reference-signal measurement set, or the index of the uplink-reference-signal resource corresponding to the link quality information measured based on the first uplink-reference-signal measurement set, information in the second measurement dataset is measured by a network device.

12. The method of claim 11, wherein
an uplink-reference-signal resource in the first uplink-reference-signal measurement set is determined based on the identity information of the *K*₁ predicted downlink receive spatial filters of the terminal device; or
an uplink-reference-signal resource in the first uplink-reference-signal measurement set is configured by a network.

13. The method of claim 11 or 12, wherein
in a case where the second measurement dataset comprises only the link quality information measured based on the first uplink-reference-signal measurement set, the link quality information measured based on the first uplink-reference-signal measurement set is input to the second network model in a third order, wherein
the third order is associated with an index of an uplink-reference-signal resource in the first uplink-reference-signal measurement set.

14. The method of any one of claims 11 to 13, wherein an uplink-reference-signal resource in the first uplink-reference-signal measurement set is part or all of uplink-reference-signal resources in a first uplink-reference-signal resource set.

15. The method of claim 14, wherein
the first uplink-reference-signal resource set is configured by a network device, or the first uplink-reference-signal resource set is specified in a protocol.

16. The method of any one of claims 2 to 15, wherein
a downlink-reference-signal resource in the first downlink-reference-signal prediction set is part or all of downlink-reference-signal resources in a second downlink-reference-signal resource set.

17. The method of claim 16, wherein
the second downlink-reference-signal resource set is configured by a network device, or the second downlink-reference-signal resource set is specified in a protocol.

18. The method of any one of claims 2 to 17, wherein
predicted downlink spatial filter information does not need to be exchanged between the terminal device and a network device, wherein
the terminal device performs downlink reception based on the identity information of the *K*₁ downlink receive spatial filters after a first duration, and the network device performs downlink transmission based on the identity information of the *K*₁ downlink transmit spatial filters after the first duration.

19. The method of any one of claims 2 to 17, further comprising:
receiving, by the terminal device, first indication information from a network device, wherein the first indication information indicates identity information of a downlink transmit spatial filter and identity information of a downlink receive spatial filter to be used among the identity information of the *K*₁ downlink transmit spatial filters and the identity information of the *K*₁ downlink receive spatial filters.

20. The method of any one of claims 2 to 19, further comprising:
receiving, by the terminal device, first prediction information from a network device, wherein the first prediction information comprises identity information of a downlink spatial filter predicted by the second network model; and
monitoring, by the terminal device, prediction performance of the first network model and/or prediction performance of the second network model according to identity information of the downlink spatial filter predicted by the first network model and the identity information of the downlink spatial filter predicted by the second network model.

21. The method of any one of claims 2 to 19, further comprising:
transmitting, by the terminal device, second prediction information to a network device, wherein the second prediction information comprises identity information of a downlink spatial filter predicted by the first network model, and the identity information of the downlink spatial filter predicted by the first network model is used for the network device to monitor prediction performance of the first network model and/or prediction performance of the second network model.

22. The method of any one of claims 2 to 21, wherein the first capability information further comprises at least one of:
a maximum number of downlink-reference-signal measurement sets supported on all preconfigured component carriers (CCs) or all preconfigured band width parts (BWPs);
a maximum number of configured downlink-reference-signal measurement sets supported;
a maximum number of downlink-reference-signal measurement sets supporting simultaneous measurement;
a maximum number of downlink-reference-signal prediction sets supported on all the preconfigured CCs or all the preconfigured BWPs;
a maximum number of uplink-reference-signal measurement sets supported on all the preconfigured CCs or all the preconfigured BWPs;
a maximum number of configured uplink-reference-signal measurement sets supported;
a maximum number of uplink-reference-signal measurement sets supporting simultaneous transmission;
a maximum number of downlink-reference-signal measurement sets supported on one CC or one BWP;
a maximum number of downlink-reference-signal resources in each of the downlink-reference-signal measurement sets supported;
a maximum number of downlink-reference-signal prediction sets supported on one CC or one BWP;
a maximum number of uplink-reference-signal measurement sets supported on one CC or one BWP;
a maximum number of uplink-reference-signal resources in each of the uplink-reference-signal measurement sets supported; or
a maximum value of *K*₁.

23. The method of any one of claims 2 to 22, wherein before performing, by the terminal device, downlink spatial filter prediction based on the first network model, the method further comprises:
receiving, by the terminal device, first information, wherein
the first information is used for configuring at least one of: the first downlink-reference-signal measurement set or the first downlink-reference-signal prediction set; or the first information is used for activating at least one of: the first downlink-reference-signal measurement set among a plurality of preconfigured downlink-reference-signal measurement sets or the first downlink-reference-signal prediction set among a plurality of preconfigured downlink-reference-signal prediction sets.

24. The method of claim 23, wherein
in a case where the second measurement dataset comprises at least one of: the link quality information measured based on the first uplink-reference-signal measurement set, or the index of the uplink-reference-signal resource corresponding to the link quality information measured based on the first uplink-reference-signal measurement set, the first information is further used for configuring the first uplink-reference-signal measurement set, or the first information is further used for activating the first uplink-reference-signal measurement set among a plurality of preconfigured uplink-reference-signal measurement sets.

25. The method of claim 1, wherein
in a case where the terminal device supports uplink spatial filter prediction based on the transmitting and receiving sides deployed network models, a third network model is deployed at a terminal device side, and a fourth network model is deployed at a network device side, wherein
the third network model is configured to output a third prediction dataset based on an input of a third measurement dataset, and the fourth network model is configured to output a fourth prediction dataset based on an input of a fourth measurement dataset;
the third measurement dataset comprises at least one of: link quality information measured based on a second uplink-reference-signal measurement set, or an index of an uplink-reference-signal resource corresponding to the link quality information measured based on the second uplink-reference-signal measurement set; or the third measurement dataset comprises at least one of: link quality information measured based on a second downlink-reference-signal measurement set, or an index of a downlink-reference-signal resource corresponding to the link quality information measured based on the second downlink-reference-signal measurement set;
and the third prediction dataset comprises one of: identity information of *K*₂ predicted uplink transmit spatial filters in a first uplink-reference-signal prediction set, or identity information of *K*₂ predicted uplink transmit spatial filters and *K*₂ predicted uplink receive spatial filters in the first uplink-reference-signal prediction set;
the fourth measurement dataset comprises at least one of: the link quality information measured based on the second uplink-reference-signal measurement set, or the index of the uplink-reference-signal resource corresponding to the link quality information measured based on the second uplink-reference-signal measurement set; and the fourth prediction dataset comprises one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set; and
*K*₂ is a positive integer.

26. The method of claim 25, wherein
in a case where the third measurement dataset comprises at least one of: the link quality information measured based on the second uplink-reference-signal measurement set, or the index of the uplink-reference-signal resource corresponding to the link quality information measured based on the second uplink-reference-signal measurement set, information in the third measurement dataset is measured by a network device and indicated to the terminal device.

27. The method of claim 26, wherein part or all of the information in the third measurement dataset is measured by the network device and indicated to the terminal device at one time, or part or all of the information in the third measurement dataset is measured by the network device and indicated to the terminal device multiple times.

28. The method of claim 26 or 27, wherein
in a case where the network device indicates only the link quality information measured based on the second uplink-reference-signal measurement set, the index of the uplink-reference-signal resource corresponding to the link quality information measured based on the second uplink-reference-signal measurement set is determined based on an indication order, wherein the indication order is associated with an index of an uplink-reference-signal resource in the second uplink-reference-signal measurement set.

29. The method of any one of claims 26 to 28, wherein
in a case where the third measurement dataset comprises only the link quality information measured based on the second uplink-reference-signal measurement set, the link quality information measured based on the second uplink-reference-signal measurement set is input to the third network model in a fourth order, wherein
the fourth order is associated with an index of an uplink-reference-signal resource in the second uplink-reference-signal measurement set.

30. The method of any one of claims 26 to 29, wherein
the third network model is the same as the fourth network model.

31. The method of any one of claims 25 to 30, wherein an uplink-reference-signal resource in the second uplink-reference-signal measurement set is part or all of uplink-reference-signal resources in a second uplink-reference-signal resource set.

32. The method of claim 31, wherein
the second uplink-reference-signal resource set is configured by a network device, or the second uplink-reference-signal resource set is specified in a protocol.

33. The method of claim 25, wherein
in a case where the third measurement dataset comprises at least one of: the link quality information measured based on the second downlink-reference-signal measurement set, or the index of the downlink-reference-signal resource corresponding to the link quality information measured based on the second downlink-reference-signal measurement set, information in the third measurement dataset is measured by the terminal device.

34. The method of claim 33, wherein
a downlink-reference-signal resource in the second downlink-reference-signal measurement set is determined based on the identity information of the *K*₂ predicted uplink receive spatial filters of a network device; or
a downlink-reference-signal resource in the second downlink-reference-signal measurement set is configured by a network.

35. The method of claim 33 or 34, wherein
in a case where the third measurement dataset comprises only the link quality information measured based on the second downlink-reference-signal measurement set, the link quality information measured based on the second downlink-reference-signal measurement set is input to the third network model in a fifth order, wherein
the fifth order is associated with an index of a downlink-reference-signal resource in the second downlink-reference-signal measurement set.

36. The method of any one of claims 33 to 35, wherein a downlink-reference-signal resource in the second downlink-reference-signal measurement set is part or all of downlink-reference-signal resources in a third downlink-reference-signal resource set.

37. The method of claim 36, wherein
the third downlink-reference-signal resource set is configured by a network device, or the third downlink-reference-signal resource set is specified in a protocol.

38. The method of any one of claims 25 to 37, wherein
in a case where the fourth measurement dataset comprises only the link quality information measured based on the second uplink-reference-signal measurement set, the link quality information measured based on the second uplink-reference-signal measurement set is input to the fourth network model in a sixth order, wherein
the sixth order is associated with an index of an uplink-reference-signal resource in the second uplink-reference-signal measurement set.

39. The method of any one of claims 25 to 38, wherein
an uplink-reference-signal resource in the first uplink-reference-signal prediction set is part or all of uplink-reference-signal resources in a third uplink-reference-signal resource set.

40. The method of claim 39, wherein
the third uplink-reference-signal resource set is configured by a network device, or the third uplink-reference-signal resource set is specified in a protocol.

41. The method of any one of claims 25 to 40, wherein
predicted uplink spatial filter information does not need to be exchanged between the terminal device and a network device, wherein
the terminal device performs uplink transmission based on the identity information of the *K*₂ uplink transmit spatial filters after a second duration, and the network device performs uplink reception based on the identity information of the *K*₂ uplink receive spatial filters after the second duration.

42. The method of any one of claims 25 to 40, further comprising:
receiving, by the terminal device, second indication information from a network device, wherein the second indication information indicates identity information of an uplink transmit spatial filter and identity information of an uplink receive spatial filter to be used among the identity information of the *K*₂ uplink transmit spatial filters and the identity information of the *K*₂ uplink receive spatial filters.

43. The method of any one of claims 25 to 42, further comprising:
receiving, by the terminal device, third prediction information from a network device, wherein the third prediction information comprises identity information of an uplink spatial filter predicted by the fourth network model; and
monitoring, by the terminal device, prediction performance of the third network model and/or prediction performance of the fourth network model according to identity information of the uplink spatial filter predicted by the third network model and the identity information of the uplink spatial filter predicted by the fourth network model.

44. The method of any one of claims 25 to 42, further comprising:
transmitting, by the terminal device, fourth prediction information to a network device, wherein the fourth prediction information comprises identity information of an uplink spatial filter predicted by the third network model, and the identity information of the uplink spatial filter predicted by the third network model is used for the network device to monitor prediction performance of the third network model and/or prediction performance of the fourth network model.

45. The method of any one of claims 25 to 44, wherein the first capability information further comprises at least one of:
a maximum number of uplink-reference-signal measurement sets supported on all preconfigured CCs or all preconfigured BWPs;
a maximum number of configured uplink-reference-signal measurement sets supported;
a maximum number of uplink-reference-signal measurement sets supporting simultaneous transmission;
a maximum number of uplink-reference-signal prediction sets supported on all the preconfigured CCs or all the preconfigured BWPs;
a maximum number of downlink-reference-signal measurement sets supported on all the preconfigured CCs or all the preconfigured BWPs;
a maximum number of configured downlink-reference-signal measurement sets supported;
a maximum number of downlink-reference-signal measurement sets supporting simultaneous reception;
a maximum number of uplink-reference-signal measurement sets supported on one CC or one BWP;
a maximum number of uplink-reference-signal resources in each of the uplink-reference-signal measurement sets supported;
a maximum number of uplink-reference-signal prediction sets supported on one CC or one BWP;
a maximum number of downlink-reference-signal measurement sets supported on one CC or one BWP;
a maximum number of downlink-reference-signal resources in each of the downlink-reference-signal measurement sets supported; or
a maximum value of *K₂.*

46. The method of any one of claims 25 to 45, wherein before performing, by the terminal device, uplink spatial filter prediction based on the third network model, the method further comprises:
receiving, by the terminal device, second information, wherein
the second information is used for configuring at least one of: the second uplink-reference-signal measurement set or the first uplink-reference-signal prediction set; or the second information is used for activating at least one of: the second uplink-reference-signal measurement set among a plurality of preconfigured uplink-reference-signal measurement sets or the first uplink-reference-signal prediction set among a plurality of preconfigured uplink-reference-signal prediction sets.

47. The method of claim 46, wherein
in a case where the third measurement dataset comprises at least one of: the link quality information measured based on the second downlink-reference-signal measurement set, or the index of the downlink-reference-signal resource corresponding to the link quality information measured based on the second downlink-reference-signal measurement set, the second information is further used for configuring the second downlink-reference-signal measurement set, or the second information is further used for activating the second downlink-reference-signal measurement set among a plurality of preconfigured downlink-reference-signal measurement sets.

48. A wireless communication method, comprising:
receiving, by a network device, first capability information from a terminal device, wherein the first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

49. The method of claim 48, wherein
in a case where the terminal device supports downlink spatial filter prediction based on the transmitting and receiving sides deployed network models, a first network model is deployed at a terminal device side, and a second network model is deployed at a network device side, wherein
the first network model is configured to output a first prediction dataset based on an input of a first measurement dataset, and the second network model is configured to output a second prediction dataset based on an input of a second measurement dataset;
the first measurement dataset comprises at least one of: link quality information measured based on a first downlink-reference-signal measurement set, or an index of a downlink-reference-signal resource corresponding to the link quality information measured based on the first downlink-reference-signal measurement set; and the first prediction dataset comprises one of: identity information of *K*₁ predicted downlink receive spatial filters in a first downlink-reference-signal prediction set, or identity information of *K*₁ predicted downlink transmit spatial filters and *K*₁ predicted downlink receive spatial filters in the first downlink-reference-signal prediction set;
the second measurement dataset comprises at least one of: the link quality information measured based on the first downlink-reference-signal measurement set, or the index of the downlink-reference-signal resource corresponding to the link quality information measured based on the first downlink-reference-signal measurement set; or the second measurement dataset comprises at least one of: link quality information measured based on a first uplink-reference-signal measurement set, or an index of an uplink-reference-signal resource corresponding to the link quality information measured based on the first uplink-reference-signal measurement set; and the second prediction dataset comprises one of: identity information of *K*₁ predicted downlink transmit spatial filters in the first downlink-reference-signal prediction set, or identity information of *K*₁ predicted downlink transmit spatial filters and *K*₁ predicted downlink receive spatial filters in the first downlink-reference-signal prediction set; and
*K*₁ is a positive integer.

50. The method of claim 49, wherein
in a case where the first measurement dataset comprises only the link quality information measured based on the first downlink-reference-signal measurement set, the link quality information measured based on the first downlink-reference-signal measurement set is input to the first network model in a first order, wherein
the first order is associated with an index of a downlink-reference-signal resource in the first downlink-reference-signal measurement set.

51. The method of claim 49 or 50, wherein
in a case where the second measurement dataset comprises at least one of: the link quality information measured based on the first downlink-reference-signal measurement set, or the index of the downlink-reference-signal resource corresponding to the link quality information measured based on the first downlink-reference-signal measurement set, information in the second measurement dataset is measured by the terminal device and reported to the network device.

52. The method of claim 51, wherein part or all of the information in the second measurement dataset is measured by the terminal device and reported to the network device at one time, or part or all of the information in the second measurement dataset is measured by the terminal device and reported to the network device multiple times.

53. The method of claim 51 or 52, wherein
in a case where the terminal device reports only the link quality information measured based on the first downlink-reference-signal measurement set, the index of the downlink-reference-signal resource corresponding to the link quality information measured based on the first downlink-reference-signal measurement set is determined based on a reporting order, wherein the reporting order is associated with an index of a downlink-reference-signal resource in the first downlink-reference-signal measurement set.

54. The method of any one of claims 51 to 53, wherein
in a case where the second measurement dataset comprises only the link quality information measured based on the first downlink-reference-signal measurement set, the link quality information measured based on the first downlink-reference-signal measurement set is input to the second network model in a second order, wherein
the second order is associated with an index of a downlink-reference-signal resource in the first downlink-reference-signal measurement set.

55. The method of any one of claims 51 to 54, wherein
the second network model is the same as the first network model.

56. The method of any one of claims 49 to 55, wherein a downlink-reference-signal resource in the first downlink-reference-signal measurement set is part or all of downlink-reference-signal resources in a first downlink-reference-signal resource set.

57. The method of claim 56, wherein
the first downlink-reference-signal resource set is configured by the network device, or the first downlink-reference-signal resource set is specified in a protocol.

58. The method of claim 49 or 50, wherein
in a case where the second measurement dataset comprises at least one of: the link quality information measured based on the first uplink-reference-signal measurement set, or the index of the uplink-reference-signal resource corresponding to the link quality information measured based on the first uplink-reference-signal measurement set, information in the second measurement dataset is measured by the network device.

59. The method of claim 58, wherein
an uplink-reference-signal resource in the first uplink-reference-signal measurement set is determined based on the identity information of the *K*₁ predicted downlink receive spatial filters of the terminal device; or
an uplink-reference-signal resource in the first uplink-reference-signal measurement set is configured by a network.

60. The method of claim 58 or 59, wherein
in a case where the second measurement dataset comprises only the link quality information measured based on the first uplink-reference-signal measurement set, the link quality information measured based on the first uplink-reference-signal measurement set is input to the second network model in a third order, wherein
the third order is associated with an index of an uplink-reference-signal resource in the first uplink-reference-signal measurement set.

61. The method of any one of claims 58 to 60, wherein an uplink-reference-signal resource in the first uplink-reference-signal measurement set is part or all of uplink-reference-signal resources in a first uplink-reference-signal resource set.

62. The method of claim 61, wherein
the first uplink-reference-signal resource set is configured by the network device, or the first uplink-reference-signal resource set is specified in a protocol.

63. The method of any one of claims 49 to 62, wherein
a downlink-reference-signal resource in the first downlink-reference-signal prediction set is part or all of downlink-reference-signal resources in a second downlink-reference-signal resource set.

64. The method of claim 63, wherein
the second downlink-reference-signal resource set is configured by the network device, or the second downlink-reference-signal resource set is specified in a protocol.

65. The method of any one of claims 49 to 64, wherein
predicted downlink spatial filter information does not need to be exchanged between the terminal device and the network device, wherein
the terminal device performs downlink reception based on the identity information of the *K*₁ downlink receive spatial filters after a first duration, and the network device performs downlink transmission based on the identity information of the *K*₁ downlink transmit spatial filters after the first duration.

66. The method of any one of claims 49 to 64, further comprising:
transmitting, by the network device, first indication information to the terminal device, wherein the first indication information indicates identity information of a downlink transmit spatial filter and identity information of a downlink receive spatial filter to be used among the identity information of the *K*₁ downlink transmit spatial filters and the identity information of the *K*₁ downlink receive spatial filters.

67. The method of any one of claims 49 to 66, further comprising:
transmitting, by the network device, first prediction information to the terminal device, wherein the first prediction information comprises identity information of a downlink spatial filter predicted by the second network model, and the identity information of the downlink spatial filter predicted by the second network model is used for the network device to monitor prediction performance of the first network model and/or prediction performance of the second network model.

68. The method of any one of claims 49 to 66, further comprising:
receiving, by the network device, second prediction information from the terminal device, wherein the second prediction information comprises identity information of a downlink spatial filter predicted by the first network model; and
monitoring, by the network device, prediction performance of the first network model and/or prediction performance of the second network model according to the identity information of the downlink spatial filter predicted by the first network model and identity information of the downlink spatial filter predicted by the second network model.

69. The method of any one of claims 49 to 68, wherein the first capability information further comprises at least one of:
a maximum number of downlink-reference-signal measurement sets supported on all preconfigured component carriers (CCs) or all preconfigured band width parts (BWPs);
a maximum number of configured downlink-reference-signal measurement sets supported;
a maximum number of downlink-reference-signal measurement sets supporting simultaneous measurement;
a maximum number of downlink-reference-signal prediction sets supported on all the preconfigured CCs or all the preconfigured BWPs;
a maximum number of uplink-reference-signal measurement sets supported on all the preconfigured CCs or all the preconfigured BWPs;
a maximum number of configured uplink-reference-signal measurement sets supported;
a maximum number of uplink-reference-signal measurement sets supporting simultaneous transmission;
a maximum number of downlink-reference-signal measurement sets supported on one CC or one BWP;
a maximum number of downlink-reference-signal resources in each of the downlink-reference-signal measurement sets supported;
a maximum number of downlink-reference-signal prediction sets supported on one CC or one BWP;
a maximum number of uplink-reference-signal measurement sets supported on one CC or one BWP;
a maximum number of uplink-reference-signal resources in each of the uplink-reference-signal measurement sets supported; or
a maximum value of *K*₁.

70. The method of any one of claims 49 to 69, wherein before performing, by the network device, downlink spatial filter prediction based on the second network model, the method further comprises:
transmitting, by the network device, first information to the terminal device, wherein
the first information is used for configuring at least one of: the first downlink-reference-signal measurement set or the first downlink-reference-signal prediction set; or the first information is used for activating at least one of: the first downlink-reference-signal measurement set among a plurality of preconfigured downlink-reference-signal measurement sets or the first downlink-reference-signal prediction set among a plurality of preconfigured downlink-reference-signal prediction sets.

71. The method of claim 70, wherein
in a case where the second measurement dataset comprises at least one of: the link quality information measured based on the first uplink-reference-signal measurement set, or the index of the uplink-reference-signal resource corresponding to the link quality information measured based on the first uplink-reference-signal measurement set, the first information is further used for configuring the first uplink-reference-signal measurement set, or the first information is further used for activating the first uplink-reference-signal measurement set among a plurality of preconfigured uplink-reference-signal measurement sets.

72. The method of claim 48, wherein
in a case where the terminal device supports uplink spatial filter prediction based on the transmitting and receiving sides deployed network models, a third network model is deployed at a terminal device side, and a fourth network model is deployed at a network device side, wherein
the third network model is configured to output a third prediction dataset based on an input of a third measurement dataset, and the fourth network model is configured to output a fourth prediction dataset based on an input of a fourth measurement dataset;
the third measurement dataset comprises at least one of: link quality information measured based on a second uplink-reference-signal measurement set, or an index of an uplink-reference-signal resource corresponding to the link quality information measured based on the second uplink-reference-signal measurement set; or the third measurement dataset comprises at least one of: link quality information measured based on a second downlink-reference-signal measurement set, or an index of a downlink-reference-signal resource corresponding to the link quality information measured based on the second downlink-reference-signal measurement set; and the third prediction dataset comprises one of: identity information of *K*₂ predicted uplink transmit spatial filters in a first uplink-reference-signal prediction set, or identity information of *K*₂ predicted uplink transmit spatial filters and *K*₂ predicted uplink receive spatial filters in the first uplink-reference-signal prediction set;
the fourth measurement dataset comprises at least one of: the link quality information measured based on the second uplink-reference-signal measurement set, or the index of the uplink-reference-signal resource corresponding to the link quality information measured based on the second uplink-reference-signal measurement set; and the fourth prediction dataset comprises one of: identity information of *K*₂ predicted uplink receive spatial filters in the first uplink-reference-signal prediction set, or identity information of *K*₂ predicted uplink transmit spatial filters and *K*₂ predicted uplink receive spatial filters in the first uplink-reference-signal prediction set; and
*K*₂ is a positive integer.

73. The method of claim 72, wherein
in a case where the third measurement dataset comprises at least one of: the link quality information measured based on the second uplink-reference-signal measurement set, or the index of the uplink-reference-signal resource corresponding to the link quality information measured based on the second uplink-reference-signal measurement set, information in the third measurement dataset is measured by the network device and indicated to the terminal device.

74. The method of claim 73, wherein part or all of the information in the third measurement dataset is measured by the network device and indicated to the terminal device at one time, or part or all of the information in the third measurement dataset is measured by the network device and indicated to the terminal device multiple times.

75. The method of claim 73 or 74, wherein
in a case where the network device indicates only the link quality information measured based on the second uplink-reference-signal measurement set, the index of the uplink-reference-signal resource corresponding to the link quality information measured based on the second uplink-reference-signal measurement set is determined based on an indication order, wherein the indication order is associated with an index of an uplink-reference-signal resource in the second uplink-reference-signal measurement set.

76. The method of any one of claims 73 to 75, wherein
in a case where the third measurement dataset comprises only the link quality information measured based on the second uplink-reference-signal measurement set, the link quality information measured based on the second uplink-reference-signal measurement set is input to the third network model in a fourth order, wherein
the fourth order is associated with an index of an uplink-reference-signal resource in the second uplink-reference-signal measurement set.

77. The method of any one of claims 73 to 76, wherein
the third network model is the same as the fourth network model.

78. The method of any one of claims 72 to 77, wherein an uplink-reference-signal resource in the second uplink-reference-signal measurement set is part or all of uplink-reference-signal resources in a second uplink-reference-signal resource set.

79. The method of claim 78, wherein
the second uplink-reference-signal resource set is configured by the network device, or the second uplink-reference-signal resource set is specified in a protocol.

80. The method of claim 72, wherein
in a case where the third measurement dataset comprises at least one of: the link quality information measured based on the second downlink-reference-signal measurement set, or the index of the downlink-reference-signal resource corresponding to the link quality information measured based on the second downlink-reference-signal measurement set, information in the third measurement dataset is measured by the terminal device.

81. The method of claim 80, wherein
a downlink-reference-signal resource in the second downlink-reference-signal measurement set is determined based on the identity information of the *K*₂ predicted uplink receive spatial filters of the network device; or
a downlink-reference-signal resource in the second downlink-reference-signal measurement set is configured by a network.

82. The method of claim 80 or 81, wherein
in a case where the third measurement dataset comprises only the link quality information measured based on the second downlink-reference-signal measurement set, the link quality information measured based on the second downlink-reference-signal measurement set is input to the third network model in a fifth order, wherein
the fifth order is associated with an index of a downlink-reference-signal resource in the second downlink-reference-signal measurement set.

83. The method of any one of claims 80 to 82, wherein a downlink-reference-signal resource in the second downlink-reference-signal measurement set is part or all of downlink-reference-signal resources in a third downlink-reference-signal resource set.

84. The method of claim 83, wherein
the third downlink-reference-signal resource set is configured by the network device, or the third downlink-reference-signal resource set is specified in a protocol.

85. The method of any one of claims 72 to 84, wherein
in a case where the fourth measurement dataset comprises only the link quality information measured based on the second uplink-reference-signal measurement set, the link quality information measured based on the second uplink-reference-signal measurement set is input to the fourth network model in a sixth order, wherein
the sixth order is associated with an index of an uplink-reference-signal resource in the second uplink-reference-signal measurement set.

86. The method of any one of claims 72 to 85, wherein
an uplink-reference-signal resource in the first uplink-reference-signal prediction set is part or all of uplink-reference-signal resources in a third uplink-reference-signal resource set.

87. The method of claim 86, wherein
the third uplink-reference-signal resource set is configured by the network device, or the third uplink-reference-signal resource set is specified in a protocol.

88. The method of any one of claims 72 to 87, wherein
predicted uplink spatial filter information does not need to be exchanged between the terminal device and the network device, wherein
the terminal device performs uplink transmission based on the identity information of the *K*₂ uplink transmit spatial filters after a second duration, and the network device performs uplink reception based on the identity information of the *K*₂ uplink receive spatial filters after the second duration.

89. The method of any one of claims 72 to 87, further comprising:
transmitting, by the network device, second indication information to the terminal device, wherein the second indication information indicates identity information of an uplink transmit spatial filter and identity information of an uplink receive spatial filter to be used among the identity information of the *K*₂ uplink transmit spatial filters and the identity information of the *K*₂ uplink receive spatial filters.

90. The method of any one of claims 72 to 89, further comprising:
transmitting, by the network device, third prediction information to the terminal device, wherein the third prediction information comprises identity information of an uplink spatial filter predicted by the fourth network model, and the identity information of the uplink spatial filter predicted by the fourth network model is used for the network device to monitor prediction performance of the third network model and/or prediction performance of the fourth network model.

91. The method of any one of claims 72 to 89, further comprising:
receiving, by the network device, fourth prediction information from the terminal device, wherein the fourth prediction information comprises identity information of an uplink spatial filter predicted by the third network model; and
monitoring, by the network device, prediction performance of the third network model and/or prediction performance of the fourth network model according to the identity information of the uplink spatial filter predicted by the third network model and identity information of the uplink spatial filter predicted by the fourth network model.

92. The method of any one of claims 72 to 91, wherein the first capability information further comprises at least one of:
a maximum number of uplink-reference-signal measurement sets supported on all preconfigured CCs or all preconfigured BWPs;
a maximum number of configured uplink-reference-signal measurement sets supported;
a maximum number of uplink-reference-signal measurement sets supporting simultaneous transmission;
a maximum number of uplink-reference-signal prediction sets supported on all the preconfigured CCs or all the preconfigured BWPs;
a maximum number of downlink-reference-signal measurement sets supported on all the preconfigured CCs or all the preconfigured BWPs;
a maximum number of configured downlink-reference-signal measurement sets supported;
a maximum number of downlink-reference-signal measurement sets supporting simultaneous reception;
a maximum number of uplink-reference-signal measurement sets supported on one CC or one BWP;
a maximum number of uplink-reference-signal resources in each of the uplink-reference-signal measurement sets supported;
a maximum number of uplink-reference-signal prediction sets supported on one CC or one BWP;
a maximum number of downlink-reference-signal measurement sets supported on one CC or one BWP;
a maximum number of downlink-reference-signal resources in each of the downlink-reference-signal measurement sets supported; or
a maximum value of *K₂.*

93. The method of any one of claims 72 to 92, wherein before performing, by the network device, uplink spatial filter prediction based on the fourth network model, the method further comprises:
transmitting, by the network device, second information to the terminal device, wherein
the second information is used for configuring at least one of: the second uplink-reference-signal measurement set or the first uplink-reference-signal prediction set; or the second information is used for activating at least one of: the second uplink-reference-signal measurement set among a plurality of preconfigured uplink-reference-signal measurement sets or the first uplink-reference-signal prediction set among a plurality of preconfigured uplink-reference-signal prediction sets.

94. The method of claim 93, wherein
in a case where the third measurement dataset comprises at least one of: the link quality information measured based on the second downlink-reference-signal measurement set, or the index of the downlink-reference-signal resource corresponding to the link quality information measured based on the second downlink-reference-signal measurement set, the second information is further used for configuring the second downlink-reference-signal measurement set, or the second information is further used for activating the second downlink-reference-signal measurement set among a plurality of preconfigured downlink-reference-signal measurement sets.

95. A terminal device, comprising:
a communication unit configured to transmit first capability information, wherein the first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

96. A network device, comprising:
a communication unit configured to receive first capability information from a terminal device, wherein the first capability information indicates whether the terminal device supports uplink spatial filter prediction based on transmitting and receiving sides deployed network models, and/or the first capability information indicates whether the terminal device supports downlink spatial filter prediction based on the transmitting and receiving sides deployed network models.

97. A terminal device, comprising a processor and a memory, wherein the memory is configured to store a computer program, and the processor is configured to invoke and execute the computer program stored in the memory, to cause the terminal device to perform the method of any one of claims 1 to 47.

98. A network device, comprising a processor and a memory, wherein the memory is configured to store a computer program, and the processor is configured to invoke and execute the computer program stored in the memory, to cause the network device to perform the method of any one of claims 48 to 94.

99. A chip, comprising a processor, wherein the processor is configured to invoke and execute a computer program stored in a memory, to cause a device equipped with the chip to perform the method of any one of claims 1 to 47.

100. A chip, comprising a processor, wherein the processor is configured to invoke and execute a computer program stored in a memory, to cause a device equipped with the chip to perform the method of any one of claims 48 to 94.

101. A computer-readable storage medium configured to store a computer program which, when executed, causes the method of any one of claims 1 to 47 to be implemented.

102. A computer-readable storage medium configured to store a computer program which, when executed, causes the method of any one of claims 48 to 94 to be implemented.

103. A computer program product comprising computer program instructions which, when executed, causes the method of any one of claims 1 to 47 to be implemented.

104. A computer program product comprising computer program instructions which, when executed, causes the method of any one of claims 48 to 94 to be implemented.

105. A computer program which, when executed, causes the method of any one of claims 1 to 47 to be implemented.

106. A computer program which, when executed, causes the method of any one of claims 48 to 94 to be implemented.
